# EUROPEAN PATENT SPECIFICATION

(11) **EP 3 979 887 B1**
(45) Date of publication and mention of the grant of the patent: **03.12.2025**
(21) Application number: 20818025.7
(22) Date of filing: 05.06.2020
(51) Int. Cl.: A47L 11/12, A47L 11/10, A47L 11/20, A47L 11/28, A47L 11/284, A47L 11/29, A47L 11/294, A47L 11/30, A47L 7/02, A47L 13/256, A47L 13/44

(54) **ROBOTIC CLEANER**
ROBOTISCHER REINIGER
APPAREIL DE NETTOYAGE ROBOTIQUE

(30) Priority: 05.06.2019 US 201962857535 P
(43) Date of publication of application: 13.04.2022
(73) Proprietor: SharkNinja Operating LLC, Needham, MA 02494 (US)
(72) Inventor: SUTTER, Catriona C., A., Brookline, Massachusetts 02446 (US); HARTING, David, Mansfield, Massachusetts 02048 (US); MATHIEU, Margaret, East Greenwich, Rhode Island 02818 (US); HEMAN-ACKAH, Marian, Needham, Massachusetts 02494 (US); PETRO, Douglas, Needham, Massachusetts 02494 (US); HOFFMAN, Trevor, Needham, Massachusetts 02494 (US); WOODROW, Chad, Needham, Massachusetts 02494 (US)
(74) Representative: Barker Brettell LLP
(86) International application number: PCT/US2020/036294
(87) International publication number: WO 2020/247732

(56) References cited:
- EP-A1- 3 069 644
- WO-A1-2018/162733
- CN-U- 204 500 545
- KR-A- 20120 088 314
- KR-A- 20120 088 314
- KR-A- 20160 092 395
- KR-B1- 101 313 775
- KR-B1- 101 471 907
- US-A- 4 750 233
- US-A1- 2007 033 767
- US-A1- 2010 013 293
- US-A1- 2014 215 735
- US-A1- 2015 059 113
- US-A1- 2015 059 113
- US-A1- 2015 128 996
- US-A1- 2016 150 934
- US-A1- 2018 235 425
- US-A1- 2019 038 103
- US-B1- 10 292 553
- US-B1- 9 265 396

## Description

### TECHNICAL FIELD

The present invention generally relates to robotic cleaners.

### BACKGROUND INFORMATION

The following is not an admission that anything discussed below is part of the prior art or part of the common general knowledge of a person skilled in the art.

A surface cleaning apparatus may be used to clean a variety of surfaces. Some surface cleaning apparatuses include a rotating agitator (e.g., brush roll). One example of a surface cleaning apparatus includes a vacuum cleaner which may include a rotating agitator as well as vacuum source. Non-limiting examples of vacuum cleaners include robotic vacuums, robotic sweepers, multi-surface robotic cleaners, wet/dry robotic cleaners, upright vacuum cleaners, canister vacuum cleaners, stick vacuum cleaners, and central vacuum systems. Other types of surface cleaning apparatus include a powered broom which includes a rotating agitator (e.g., brush roll) that collects debris, robotic mops, and other robotic cleaners that do not include a vacuum source.

Within the field of robotic and autonomous cleaning devices, there are a range of form factors and features that have been developed to meet a range of cleaning needs. However, certain cleaning applications remain a challenge.

Wet floor cleaning in the home has traditionally involved manual labor and generally a tool consisting of a wet mop or sponge attached to the end of a handle. The mop or sponge is used to apply a cleaning fluid onto the surface of a floor. The cleaning fluid is applied, and the tool used to agitate the surface of the floor by scrubbing. The components of the cleaning fluid and the scrubbing agitation helps suspend any dirt or contaminants on the surface into the cleaning fluid. The contaminants are then removed from the surface of the floor as the tool removes the cleaning fluid, generally by having the mop or the sponge absorb the cleaning fluid, and thus the dirt or contaminants. Water may be used as a cleaning fluid to perform wet cleaning on floors, but often it is more effective to use a cleaning fluid that is a mixture of water and soap or detergent that reacts with contaminants to emulsify the contaminants into the water. A cleaning fluid may further include other components such as a solvent, a fragrance, a disinfectant, a drying agent, abrasive particulates and the like to increase the effectiveness of the cleaning process or improve the end-results such as floor appearance.

As referenced above, the sponge or mop may be used as a scrubbing element for scrubbing the floor surface, particularly with stubborn stains and particulate matter. The scrubbing action serves to agitate the cleaning fluid for mixing with contaminants as well as to apply a friction force for loosening contaminants from the floor surface. Agitation enhances the dissolving and emulsifying action of the cleaning fluid and the friction force helps to break bonds between the surface and contaminants.

Dry debris may be removed prior to the wet floor cleaning either using a vacuum or via dry mopping. This minimizes the contamination of cleaning fluid and cleaning tools used during the wet floor cleaning. But this additional step adds time and labor to the cleaning process.

The traditional manual method is labor intensive and time consuming. A need exists in the art for a product that automates both steps of wet floor cleaning in the home.

US 2015/059113 A1 describes a cloth equipped along one of its lengthwise edges with a protrusion, perpendicular or coplanar to the plane of the cleaning surf aces of said cloth; said protrusion being suitable for being joined to a mop base with a gripper mouth.

US 4750233 A describes, for use with a sponge mop, a pad, a frame adapted to be removably attached to the sponge mop, the frame being provided with integral structure forming one part of a two-part interlocking assembly adapted to removably attach the pad to the frame, and a locking member forming the other part of said assembly and being adapted to interlock with said one part of said assembly.

KR 2012 0088314 A describes a robot cleaner having a reciprocative mop mounting plate for polishing a floor surface with a mop by reciprocating a mop mounting plate mounted at the bottom of the robot cleaner.

KR 101471907 B1 describes a beetle type window cleaning robot. A first robot unit cleans by including a plurality of cleaning units. Each cleaning unit of the first robot unit cleans a location by a parallel motion of a link bar connected to a moving block which moves by a rotary cam.

### BRIEF SUMMARY

According to a first aspect of the invention, there is provided a robotic cleaner according to claim 1.

According to a second aspect of the invention, there is provided a cleaning pad for a robotic cleaner according to claim 15.

Some optional and/or preferable features are provided in the dependent claims.

Robots and methods consistent with the present disclosure overcome the problems cited in the prior by providing, inter alia, an autonomous robot capable of vacuuming and wet cleaning floors for home use. Autonomous cleaning robots consistent with the present disclosure include a chassis and a transport drive system configured to autonomously transport cleaning elements over a target surface. The robot is supported on the target surface by wheels in rolling contact with the target surface and the robot includes controls and drive elements configured to direct the robot to generally traverse the target surface in a forward direction defined by a fore-aft axis. The robot is further defined by a transverse axis perpendicular to the fore-aft axis. The robot includes a drive device controlled by a controller and powered by one or more motors for performing autonomous movement over the target surface.

In some embodiments, the cleaning robot includes at least two separate cleaning modules. The cleaning modules may operate separately or in coordination. In some embodiments, the modular cleaning robot includes a first cleaning module configured to collect dry debris from the target surface and with a second cleaning module configured to perform wet cleaning by applying a cleaning fluid onto a cleaning pad and using the cleaning pad to scrub the target surface. The surface cleaning robot may also include at least two containers or compartments, carried thereby, to store debris collected by the first cleaning module and to store cleaning fluid to be used by the second cleaning module.

The robot chassis may also carry a wet cleaning module comprising cleaning elements arranged to apply a cleaning fluid onto a cleaning pad. The wet cleaning module may be configured to apply the cleaning pad to the target surface and may further include elements for using the cleaning pad to scrub the target surface.

In some embodiments, the cleaning robot also includes the wet cleaning module attached to the chassis and a liquid applicator configured to spread cleaning fluid uniformly onto the cleaning pad, wherein the configuration causes the liquid applicator to apply the cleaning fluid onto the cleaning pad using at least one pump while transporting the chassis in a forward direction. In some embodiments, the robot includes a scrubbing element configured to agitate the cleaning pad; wherein the agitation of the cleaning pad causes the cleaning pad to scrub the target surface when transporting the chassis in the forward direction. In some embodiments, the scrubbing element configured to agitate the cleaning pad and the at least one pump configured to apply the cleaning fluid onto the cleaning pad are powered using a single wet cleaning module motor. A wet cleaning module connected to the chassis interfaces with a gear train coupled to the drive shaft of the wet cleaning module motor. The gear train is attached to a cam that agitates a cleaning pad assembly within the wet cleaning module.

In some embodiments, one or more peristaltic pumps pump the cleaning fluid onto the cleaning pad. The pump(s) may be within the wet cleaning module. Each of the one or more pumps may include at least one check valve configured to receive cleaning fluid from a cleaning fluid storage container and to apply said cleaning fluid onto the cleaning pad. Umbrella or duckbill valves disposed at one or more tube openings may cooperate to permit fluid to pass through the tube in only one direction. Mechanical actuators attached to the cleaning pad assembly may engage with one or more flexible tubes associated with the one or more pump. The mechanical actuators may compress the one or more flexible tube. As the actuators move, the part of the one or more flexible tubes under compression is pinched closed, thus forcing the cleaning fluid to move through the one or more flexible tubes and onto the cleaning pad.

In some embodiments, the agitation of the cleaning pad assembly is caused by a movement of the pad along a horizontal plane and perpendicular to the fore-aft axis of the cleaning robot. In another embodiment, the cleaning pad assembly moves along a vertical axis during the cleaning mode. In another embodiment, the cleaning pad assembly moves in an elliptical or circular motion such that the cleaning pad moves in a helical path along the surface being cleaned. In an embodiment, the cleaning pad assembly moves using a pendulum motion, such that one side of the pad is driven towards the floor while the other side lifts from the floor during the cleaning mode.

In some embodiments of the above aspect, the cleaning pad is attached to the wet cleaning module using an attachment mechanism. The attachment mechanism may be particularly attached to a portion of the wet cleaning module configured as a cleaning pad assembly. Such an attachment mechanism may be constructed to allow a user to release the cleaning pad without having to touch a soiled surface. In an embodiment, the cleaning pad is attached to the cleaning pad assembly using a front portion that slides into a channel configured to receive the sliding portion. In another embodiment, the cleaning pad includes a folded pocket configuration that slides over a portion of the cleaning pad assembly; said pocket may be formed from the same material as the cleaning pad, in other embodiments. The pocket may be partially formed using a rigid material. In some embodiments, the cleaning pad is attached to the cleaning pad assembly using an elastic connector, grommets, hooks, t-slots and/or hook and loop fasteners, or a combination thereof. In various embodiments, the side and/or rear portion of the cleaning pad may be stretched onto the cleaning pad assembly using elastic or bungee attachment pieces. In some embodiments, the rear portion of the cleaning pad is formed into a pocket such that it is pulled onto the cleaning pad assembly. In some embodiments, the rear portion of the cleaning pad may be molded or formed to form an interference fit with the cleaning pad assembly. Other embodiments may include snaps, hook and loop fasteners, and/or magnets to secure the cleaning pad onto the cleaning pad assembly.

In some embodiments, the robot includes a dry waste storage container, compartment, or tank attached to the chassis and arranged to receive the debris therein. Some embodiments of the autonomous robot include a cleaning fluid storage container, compartment, bladder, or tank attached to the chassis and configured to store a supply of the cleaning fluid therein and to deliver the cleaning fluid to the liquid applicator using at least one pump assembly. In some embodiments, the cleaning fluid comprises water and/or water mixed with any one of soap, solvent, fragrance, disinfectant, emulsifier, drying agent and abrasive particulates.

In some embodiments, the dry waste container is configured to be removable from the chassis by a user and to be emptied by the user. In other embodiments, the dry waste container is configured to be not be removable from the chassis by a user and to be emptied by the user. Some embodiments include a cleaning fluid storage container, attached to the chassis and configured to store a supply of the cleaning fluid therein and to deliver the cleaning fluid to the liquid applicator, and in some cases, said cleaning fluid storage container is configured to be removable from the chassis by the user and to be filled by the user. In some embodiments, said cleaning fluid storage container is configured to not be removable from the chassis by a user and for the cleaning fluid storage container to be filled by the user. In some embodiments, the cleaning fluid storage container is configured such that the fluid is isolated from one or more motors, drive devices, and/or any other electronic parts contained within the robotic cleaner chassis. In some embodiments, the cleaning fluid storage container may be removed by a user in a horizontal direction, such that the cleaning robot remains level during the removal of the cleaning fluid storage container. In some embodiments, the cleaning fluid storage container is attached to the chassis using a latching mechanism. The attachment may be released by the user using a vertical pinching motion. In some embodiments, the attachment may be released by the user using a horizontal pinching motion.

Some embodiments include one or more drive devices attached to the chassis for transporting the robotic cleaner over the target surface; one or more motors attached to the chassis for delivering electrical power to each of a plurality of power consuming subsystems attached to the chassis; and, a controller located within the chassis for controlling the one or more drive devices, the collecting apparatus, and the liquid applicator, to autonomously transport the robot over the cleaning surface and to autonomously clean the target surface. Some embodiments may also include a plurality of sensors configured to sense conditions external to the cleaning robot and to sense conditions internal to the robot and to generate sensor signals in response to sensing said conditions; a system for distributing the sensor signals to the controller; and, the controller for implementing predefined operating modes of the robot in response to said conditions.

Some embodiments include a user interface configured to receive an input from a user; a system for distributing the input to a controller; and, the controller for implementing predefined operating modes of the robot in response to the input. In some embodiments, the autonomous cleaning robot includes a user interface attached to the chassis. In some embodiments, the autonomous cleaning robot includes a remote control configured to receive an input from a user; the remote control configured to distribute the input to the controller and, the controller for implementing predefined operating modes of the robot in response to the input. In some embodiments, the robotic cleaner includes wireless component configured to communicate with a mobile application; the mobile application configured to receive input from a user, and the mobile application further configured to distribute the input received to the controller and, the controller for implementing predefined operating modes of the robot in response to the input.

In some embodiments, the robotic cleaner is configured with a circular cross-section having a vertical center axis and wherein said fore-aft axis, said transverse axis and said vertical axis are mutually perpendicular and wherein the motive drive subsystem is configured to rotate the robot about the center vertical axis for changing the orientation of the forward travel direction.

In some embodiments, the apparatus includes a detection element attached to the chassis. In some embodiments, the detection element is a humidity sensor attached to the bottom of the chassis above the position of a cleaning pad, and further includes an opening directed towards the cleaning pad in which the humidity sensor is situated, and a vent that is fluidly connected to the interior of the chassis. The detection element may be situated such that it is not directly exposed to the cleaning fluid. In some embodiments, the robotic cleaning device further includes a detection element configured to sense conditions and to generate signals in response to sensing said conditions; a controller configured to receive the electrical sensor signals and to implement operating modes in response to sensing said conditions. Said operating modes may include determining a flow-rate of cleaning fluid pumped onto the cleaning pad by at least one pump.

In some embodiments at least one peristaltic pump ejects a flow of cleaning fluid in accordance with an operating mode and wherein the flow rate is determined based on the information provided by the detection element. In some embodiments, the modular cleaning device also includes an autonomous transport drive subsystem, a sensor module for sensing conditions and a power module all supported by the chassis and controlled by a controller to autonomously move the cleaning elements substantially over the entire surface over the surface in accordance with predefined operating modes and in response to conditions sensed by the sensor module.

In some embodiments, the modular cleaning apparatus also includes a liquid storage container, carried on the chassis, for storing a supply of the cleaning fluid therein; at least one peristaltic pump assembly configured with at least one first pump portion for drawing cleaning fluid from the container and for delivering the cleaning fluid to the at least one nozzle; (and at least one mechanical actuator for mechanically actuating the first pump portion). In some embodiments the at least one peristaltic pump ejects a flow of cleaning fluid in accordance with an operating mode and wherein the flow rate is determined based on the information provided by the detection element. In some operating modes, the flow rate falls within a range consisting of 3.5 mL/min to 5 mL/min. In some embodiments, each pump assembly may be configured with an independent mechanical actuator. The size of the mechanical actuator may be determined by the placement of the pump assembly within the robotic cleaner (e.g. a pump located in the center may use a larger mechanical actuator and thereby provide a higher flow rate that one located on the edge of the robotic cleaner).

In accordance with an embodiment of the present invention, a robotic cleaning apparatus or robotic cleaner is disclosed wherein a portion of the bottom chassis of the robotic cleaning apparatus is formed from a floating soleplate. Said floating soleplate may move along a drop axis. The drop axis extends transverse to a target surface on which the robotic cleaning apparatus is moving. The floating soleplate may move by translating vertically, that is by maintaining a plane that is generally parallel to the target surface while moving up and down along two or more pins.

In some embodiments, a surface treatment robot includes a robot body, and at least two drive members that drive the robot body forward and direct the robot body. A dispensed fluid compartment that holds fluid to be dispensed by the robot; and a powered agitator drives at least one cleaning pad to scrub a target surface, with the assistance of dispensed fluid, substantially positioned perpendicularly to the forward movement of the robot body and said cleaning pad scrubbing an area aft of a suction conduit.

An example robot according to the present invention has a cleaning pad with a leading edge of said cleaning pad of about 31-34 centimeters (cm), and mass of about 3 kilograms (kg). In some embodiments, a rear caster wheel improves the ability of the robotic cleaner to cross over thresholds while cleaning and may be used to control the engagement of the cleaning pad with the target surface. The pressure applied to the cleaning pad may be distributed across the cleaning pad or concentrated along a leading edge of the cleaning pad to improve cleaning while limiting the amount of drag caused by the cleaning pad engagement with the floor. In some embodiments, the cleaning pad may have a leading edge of about 10-40cm in width, the robot may have a mass of less than about 10kg, and an average drag force between the cleaning pad 121 and the floor up to about 40% of the weight of the robotic cleaner may be generated during cleaning. This robot size allows the robot to be small enough to maneuver around a home and obstacles therein, and this weight allows the cleaning pad to engage with the floor surface, improving cleaning efficiency, while being light enough for a single user to transport the robot around a home.

In some embodiments, the cleaning pad is constructed of a reusable microfiber material. In an alternative embodiment, the cleaning pad is constructed from a disposable material.

Some embodiments of a robot consistent with the present invention relate to a surface treatment robot wherein the surface treatment robot uses one or more sensors to determine the type of surface on which it is moving. The one or more sensors can be any suitable sensors operable to detect a physical condition or phenomena and provide the corresponding data to a controller directing the surface treatment robot's behavior such as movement, cleaning activating, and/or escape behaviors. In some embodiments, the algorithms that control the surface treatment robot behavior are selected based on the determinization of the surface type. Some embodiments includes a method for detecting the floor using an ultrasonic sensor. Such a floor sensor comprises an ultrasonic sensor transmitting an ultrasonic signal to the floor surface and receiving the ultrasonic signal reflected from the floor surface. The sensor allows for determination of floor types such as carpet, hardwood, or tile based on the reflective conditions of the floor.

In some embodiments, a method for detecting the floor type includes an acoustic sensor such as a microphone which can detect ambient noise. As a surface treatment robot traverses a target surface, noise from the surrounding area may be detected using an acoustic sensor. The volume and quality of that noise may vary based on the qualities of the floor surface such that the acoustic sensor allows for determination of floor types such as carpet, hardwood, or tile based on the reflective conditions of the floor. In some embodiments, the noise that the surface treatment robot generates while moving is used by an acoustic sensor to determine floor type. In some embodiments, a method for detecting the floor type includes an optical sensor such as an emitter that emits light and a detector that can detect reflected light. The reflective qualities of the floor surface may be used for determination of floor types such as carpet, hardwood, or tile based.

In some embodiments, the dry debris cleaning module may utilize one or more side brush assemblies disposed on the chassis of the robotic cleaner and configured to move along the target surface such that debris is swept into the path of the dry debris cleaning module. A suction conduit may be disposed on the underside of the robot chassis and situated substantially perpendicular to the fore-aft axis to suction up debris in the path of the dry debris cleaning module as the robot traverses the target surface. In some embodiments the dry debris cleaning system is disposed fore of a wet cleaning system.

In some embodiments, there is provided a robot having a wheel, wherein the wheel material includes a sponge rubber with a density of 40 pounds per cubic foot. In some embodiments, the wheel has a tread pattern pressed into the sponge rubber during molding. The tread pattern may include a chevron or modified chevron indentations. In some embodiments a segmented chevron pattern is used for the wheel treads. The depth and shape of the indentation allows for improved traction on wet floors while still allowing the robotic cleaning apparatus to move across carpet or other household flooring materials. In particular, the choice of tread pattern allows the robotic cleaning apparatus to operate while using a cleaning pad that increases drag on the device. In some embodiments, the material used may be determined based on the mass of a robot carrying cleaning fluid, and/or any chemicals contained therein and the properties of the cleaning fluid when on the floor surface. In some embodiments, the present disclosure relates to wheels, including, for example, those made of neoprene and chloroprene, and other closed cell rubber sponge materials. Wheels made of polyvinyl chloride (PVC) and acrylonitrile-butadiene (ABS) (with or without other extractables, hydrocarbons, carbon black, and ash) may also be used.

Some embodiments of robots consistent with the present invention include one or more air outlets disposed on the chassis of the robotic cleaner and configured to direct debris into the path of the dry debris cleaning module. A suction conduit is disposed on the underside of the robot chassis and situated substantially perpendicular to the fore-aft axis to suction up debris in the path of the dry debris cleaning module as the robot traverses the target surface. In some embodiments the dry debris cleaning system is disposed fore of a wet cleaning system.

In some embodiments of a robot consistent with the present invention, there is provided a robotic cleaning apparatus having an air outlet, wherein the air outlet is configured to exhaust air from a suction motor such that the air does not agitate debris. In some embodiments, the robotic cleaner includes at least one exhaust duct that directs air above the robot chassis.

In some embodiments, a modular cleaning device includes a suction conduit including any suitable combination of rigid conduits, flexible conduits, chambers and other features that may cooperate to direct a flow of air through the modular cleaning device. Optionally, one or more filters or filtration members, for example a HEPA filter, can be configured such that air traveling through the suction conduit passes through the one or more filters prior to the one or more air outlets. The one or more air outlets may be configured to fluidly connect to one or more air jet assemblies. Air exiting from the one or more clean air outlets and/or the one or more fan outlets may be directed through the one or more air jet assemblies. The one or more air jet assemblies may include one or more nozzles and/or vents to direct air jets, wherein the one or more nozzles and/or vents are a component of the one or more air jet assemblies.

In some embodiments consistent with the present invention, there is provided a robotic cleaning apparatus having an air exhaust outlet, wherein the air exhaust outlet is configured to move air such that it dries cleaning fluid deposited by the robotic cleaner during a wet cleaning mode.

A robotic cleaner consistent with the present invention may embody any one or more of the features described herein and the features may be used in any particular combination or sub-combination.

### BRIEF DESCRIPTION OF THE DRAWINGS

These and other features and advantages will be better understood by reading the following detailed description, taken together with the drawings wherein:
FIG. 1A is an top isometric view of a robotic cleaner consistent with embodiments of the present disclosure.
FIG. 1B is a schematic isometric view of the robotic cleaner shown in FIG. 1.
FIG. 2A is a top view of the robotic cleaner shown in FIG. 1.
FIG. 2B is a schematic top view of the robotic cleaner shown in FIG. 1.
FIG. 3 is a bottom view of the robotic cleaner shown in FIG. 1.
FIGS. 4A and 4B are schematic views of a cleaning pad and caster wheel for a robotic cleaner consistent with embodiments of the present disclosure.
FIGS. 5A and 5B are schematic perspective views of liquid storage containers for a robotic cleaner consistent with embodiments of the present disclosure.
FIG. 6A-D illustrates attachment mechanisms to couple the wet cleaning module to a multi-surface cleaner consistent with embodiments of the present disclosure.
FIG. 7A-C illustrate the process for a user to fill a cleaning fluid tank for a wet cleaning module and reattach the wet cleaning module to a multi-surface cleaner consistent with embodiments of the present disclosure.
FIGS. 7D-7E illustrate a wet cleaning module attached to a multi-surface cleaner consistent with embodiments of the present disclosure.
FIGS. 7F-7G illustrate the multi-surface cleaner shown in FIGS. 7B-7C without a wet cleaning module attached.
FIG. 8 is a schematic isometric view of a wet cleaning module of a robotic cleaner consistent with embodiments of the present disclosure.
FIG. 9 is a schematic top view of the wet cleaning module shown in FIG. 8.
FIG. 10A is a schematic front view of the wet cleaning module shown in FIG. 8.
FIG. 10B is a schematic back view of the wet cleaning module shown in FIG. 8.
FIG. 11A is a schematic left side view of the wet cleaning module shown in FIG. 8.
FIG. 11B is a schematic right side view of the wet cleaning module shown in FIG. 8.
FIG. 12 is a schematic exploded view of the wet cleaning module shown in FIG. 8.
FIG. 13 is a schematic diagram of a motor and gear train coupled to a cleaning pad plate consistent with embodiments of the present disclosure.
FIG. 14 is a schematic diagram of an agitated cleaning plate and a peristaltic pump assembly consistent with embodiments of the present disclosure.
FIG. 15A is a close up view of an agitated cleaning plate and a peristaltic pump assembly shown in FIG. 14.
FIG. 15B is a close up view of a peristaltic pump assembly shown in FIG. 15A.
FIG. 16 is a perspective view of a schematic diagram of a motor and gear train coupled to a cleaning pad plate shown in FIG 14.
FIG. 17A is a schematic bottom view of a cleaning pad plate of a robotic cleaner consistent with embodiments of the present disclosure.
FIG. 17B is a schematic bottom view of a cleaning pad of a robotic cleaner consistent with embodiments of the present disclosure.
FIG. 18A is a schematic isometric view of a cleaning pad plate of a robotic cleaner consistent with embodiments of the present disclosure.
FIG. 18B is a schematic isometric view of a cleaning pad of a robotic cleaner consistent with embodiments of the present disclosure.
FIG. 19A depicts a sensor configured to detect conditions during the operation of a robotic cleaner consistent with embodiments of the present disclosure.
FIG. 19B is a schematic illustration of a robotic cleaner including the sensor shown in FIG. 19A consistent with embodiments of the present disclosure.
FIG. 19C is a flowchart illustrating a use of the sensor shown in FIG. 19A.
FIGS. 20A-20B are side views of a cleaning pad plate and cleaning pad consistent with embodiments of the present disclosure.
FIG. 20C is an isometric view of a cleaning pad attached to a wet cleaning module consistent with embodiments of the present disclosure.
FIGS. 21A-21D illustrate an attachment mechanism for fixing a cleaning pad onto a wet cleaning module consistent with embodiments of the present disclosure.
FIGS. 22A-22B illustrate an attachment mechanism for fixing a cleaning pad onto a wet cleaning module consistent with embodiments of the present disclosure.
FIGS. 23A-23C illustrate an attachment mechanism for fixing a cleaning pad onto a wet cleaning module consistent with embodiments of the present disclosure.
FIGS. 24A-24D illustrate an attachment mechanism for fixing a cleaning pad onto a wet cleaning module consistent with embodiments of the present disclosure.
FIG. 25A is a schematic diagram of the wheel assembly of a robotic cleaner.
FIGS. 25B-25K are schematic diagrams of wheels of a robotic cleaner.
FIG. 26 is a schematic isometric view of a brush roll assembly of a robotic cleaner consistent with embodiments of the present disclosure.
FIG. 27A is a schematic top view of the brush roll assembly shown in FIG. 26.
FIG. 27B is a schematic bottom view of the brush roll assembly shown in FIG. 26.
FIG. 28A is a schematic right side view of the brush roll assembly shown in FIG. 26.
FIG. 28B is a schematic left side view of the brush roll assembly shown in FIG. 26.
FIG. 29A is a schematic front view of the brush roll assembly shown in FIG. 26.
FIG. 29B is a schematic back view of the brush roll assembly shown in FIG. 26.
FIG. 30A is a schematic isometric view of the brush roll assembly shown in FIG. 26 placed within a chassis for a robotic cleaner.
FIG. 30B is a schematic side view of the brush roll assembly shown in FIG. 26 placed within a chassis for a robotic cleaner.
FIG. 31 depicts a robotic cleaner chassis having robotic cleaner subsystems attached thereto, such as the brush roll assembly shown in FIG. 26, consistent with embodiments of the present disclosure.
FIGS. 32A-32B are a schematic view of an example ducting system capable of being used with a robotic cleaner consistent with embodiments of the present disclosure.
FIGS. 33A-33B illustrate an example embodiment of a vent that may be used with a robotic cleaner consistent with embodiments of the present disclosure.

### DETAILED DESCRIPTION

Although one or more of the above features may be implemented in any type of robotic cleaner, example embodiments is described as a robotic cleaner including one or more of the above features. One example embodiment of the robotic cleaner includes a generally round housing with a displaceable front bumper, a pair of drive wheels at the sides of the housing, a first non-driven caster wheel at the front of the housing, a second non-driven caster wheel at the back of the housing, at least one main rotating brush roll, a vacuum suction system, a rechargeable battery, a removable dust container, a wet cleaning module including a liquid applicator configured to apply a cleaning fluid onto a cleaning pad using one or more pumps, and an agitation module for agitating the cleaning pad to scrub a surface. The example embodiment of the robotic cleaner may also have various sensors around the housing including bump sensors, obstacle detection sensors, a side wall sensor, acoustic sensors, and cliff sensors. A power switch may be located on the side of the housing and control buttons may be located on the top of the housing for initiating certain operations (e.g., autonomous cleaning, spot cleaning, and docking). The robotic cleaner further includes hardware and software for receiving the sensor inputs and controlling operation in accordance with various algorithms or modes of operation. The robotic cleaner may also be provided with a charging base and a remote control. The robotic cleaner may also include one or more Hall effect sensors to detect a docking station and/or to detect magnetic strips, which provide virtual walls to confine movement of the robotic cleaner.

As used herein, the terms "above" and "below" are used relative to an orientation of the cleaning apparatus on a surface to be cleaned and the terms "front" and "back" are used relative to a direction that the cleaning apparatus moves on a surface being cleaned during normal cleaning operations (i.e., back to front). As used herein, the term "leading" refers to a position in front of at least another component but does not necessarily mean in front of all other components.

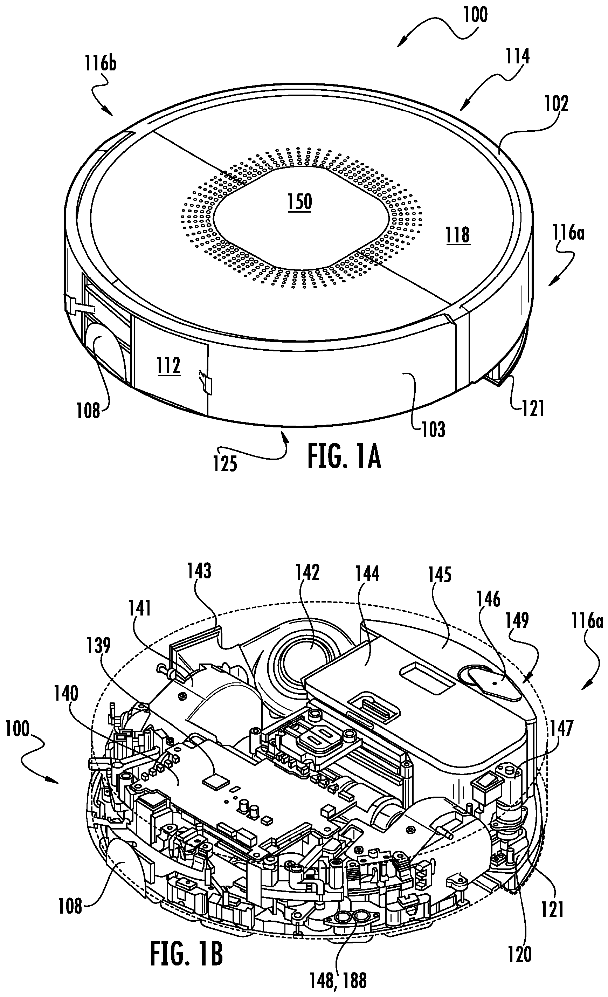

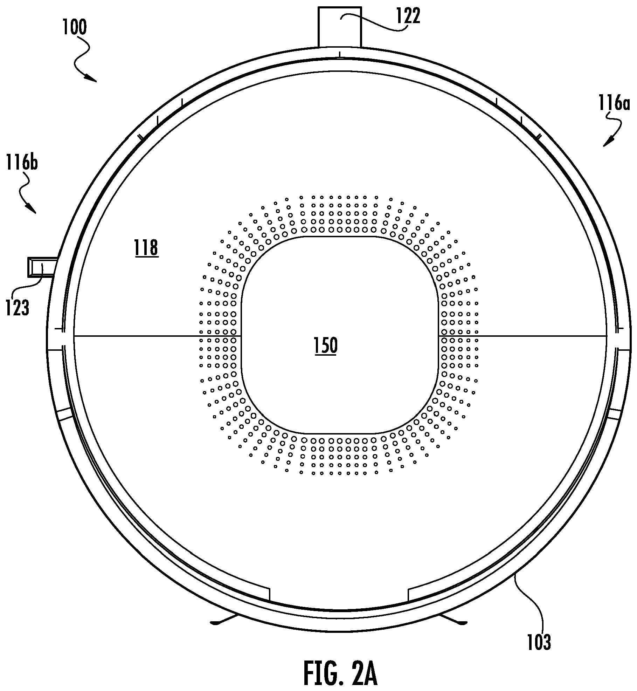

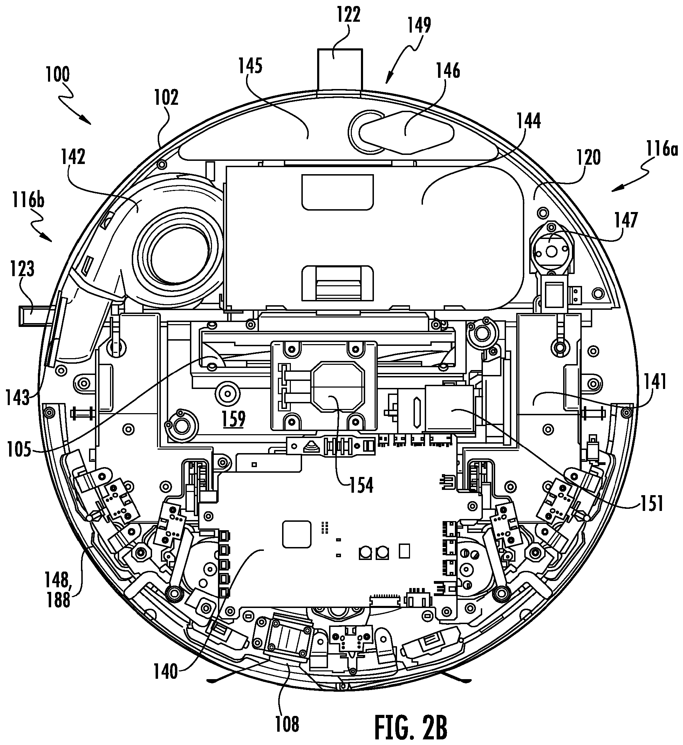

Referring to FIGS. 1A-3, an embodiment of a robotic cleaner 100, consistent with embodiments of the present disclosure, is shown and described. Although a particular embodiment of a robotic cleaner is shown and described herein, the concepts of the present disclosure may apply to other types of robotic cleaners. The robotic cleaner 100 includes a housing or chassis 102 with a front side 112, and a back side 114, left and right sides 116a, 116b, an upper side (or top surface) 118, and a lower or under side (or bottom surface) 125. A bumper 103 is movably coupled to the housing 102 around a substantial portion of the forward portion of the housing 110. The top 118 of the housing 102 may include a user interface 150 (e.g., buttons) to initiate certain operations, such as autonomous cleaning, spot cleaning, and docking and indicators (e.g., LEDs) to indicate operations, battery charge levels, errors and other information.

As shown, the robotic cleaner 100 includes a vacuum including suction conduit 155, a dust cup 144 and a suction motor 142. The suction conduit 155 disposed at the bottom of the chassis 120 in opposed facing relationship to the cleaning surface and is fluidly coupled to the dust cup 144 and the suction motor 142. The suction motor 142 causes debris to be suctioned into the suction conduit 155 and deposited into the dust cup 144 for later disposal. An air exhaust port 143 is fluidly coupled to the suction motor 142. In various embodiments, the air exhaust port 143 may be configured to prevent undesirable debris agitation, to direct debris, or to dry cleaning fluid, as will be discussed more fully below.

As also shown, the robotic cleaner 100 includes a plurality of drive wheels 130 coupled to the chassis 102, a front caster wheel 107 coupled to the chassis 102 at the front of the chassis 102 and rear caster wheel 187 coupled to the chassis 102 at the rear of the chassis 102. The wheels 130 are independently rotatable about associated rotational axes and are coupled to a respective drive motor contained within a driven wheel assembly 141. As such, each wheel 130 may generally be described as being independently driven. The robotic cleaner 100 can be autonomously steered or controlled to maneuver over a cleaning or target surface by drive signals from a controller 139 disposed on a control board 140. The drive signals may maneuver the robotic cleaner by, for example, adjusting the rotational speed of one of the plurality of wheels 130 relative to the other of the plurality of wheels 130.

The displaceable bumper 103 can be disposed along a portion of a perimeter defined by the housing 102 of the robotic cleaner 100. The displaceable bumper 103 is configured to transition between an unactuated position and an actuated position in response to engaging, for example, an obstacle. The displaceable bumper 103 can be configured to be moveable along a first axis extending generally parallel to a top surface of the housing 118. As such, the displaceable bumper 103 is displaced in response to engaging (e.g., contacting) at least a portion of an obstacle disposed on and extending from a surface to be cleaned. Additionally, or alternatively, the displaceable bumper 103 can be configured to be moveable along a second axis that extends transverse to (e.g., perpendicular to) the first axis. As such, the displaceable bumper 103 is displaced in response to engaging (e.g., contacting) at least a portion of an obstacle that is spaced apart from the surface to be cleaned. Therefore, the robotic cleaner 100 may avoid becoming trapped between the obstacle and the surface to be cleaned. The user interface 150 can be provided to allow a user to control the robotic cleaner 100. For example, the user interface 150 may include one or more push buttons 154 that correspond to one or more features of the robotic cleaner 100. Liquid ingress protection may be provided at the user interface 150 to prevent or otherwise mitigate the effects of a liquid being inadvertently spilled on the housing 102 of the robotic cleaner 100.

The robotic cleaner 100 includes a rotating agitator 105 (e.g., a main brush roll) in a brush roll assembly 159. The rotating agitator 105 rotates about a substantially horizontal axis to direct debris into the suction conduit 155. The rotating agitator 105 is at least partially disposed within the suction conduit 155. The rotating agitator 105 may be coupled to a motor 151, such as AC or DC electrical motors, to impart rotation, for example, by way of one or more drive belts, gears or other driving mechanisms. The robotic cleaner may also include one or more driven rotating side brushes (not shown) coupled to motors to sweep debris toward the rotating agitator 105. In addition, or alternatively, the robotic cleaner may also include one or more air jet assemblies configured to sweet debris toward the rotating agitator 105.

The rotating agitator 105 may have bristles, fabric, or other cleaning elements, or any combination thereof around the outside of the agitator 105. The rotating agitator 105 may include, for example, strips of bristles in combination with strips of a rubber or elastomer material. The rotating agitator 105 may also be removable from the robotic the housing 102 and the brush roll assembly 159 to allow the rotating agitator 105 to be cleaned more easily and allow the user to change the size of the rotating agitator 105, change type of bristles on the rotating agitator 105, and/or remove the rotating agitator 105 entirely depending on the intended application. The robotic cleaner 100 may further include a bristle strip (not shown) on an underside 125 of the housing 102 and along a portion of the suction conduit 155. The bristle strip may include bristles having a length sufficient to at least partially contact the surface to be cleaned. The bristle strip may also be angled, for example, toward the suction conduit 155.

The robotic cleaner 100 also includes several different types of sensors. One or more forward obstacle sensors 108 such as infrared sensors, ultrasonic sensors, camera, and/or time-of-flight sensors may be coupled to, or integrated with, the bumper 103 to detect the proximity of obstacles in front of the bumper 103. One or more floor type detection sensors 148, 188 (e.g., an acoustic sensor, an ultrasonic sensor, and/or an optical sensor) may be used to detect qualities of the floor surface on which the robotic cleaner 100 travels and/or changes in the qualities of the floor surface on which the robotic cleaner 100 travels. In some embodiments, the forward obstacle sensors 108 or other sensors are mounted on the housing 102 of the robotic cleaner 100. The forward obstacle sensors 108 placed on the housing 102 may see through the bumper 103 using holes or windows.

The one or more sensors 148, 188 can be any suitable sensors operable to detect a physical condition or phenomena and provide the corresponding data to the controller 139 directing robotic cleaner's 100 behavior such as movement, cleaning mode, suction motor strength, and/or escape behaviors, e.g. using algorithms stored in memory on the control board 140. In some embodiments, the algorithms that control the robotic cleaner's 100 behavior are selected based on the determination of the surface type by the floor type detection sensors 148, 188. In other embodiments, the algorithms that control the robotic cleaner's 100 behavior are selected based on the identification of a change of the surface type by the floor type detection sensors 148, 188.

In some embodiments, an acoustic sensor 148 allows for determination of floor types such as carpet, hardwood, and/or tile based on the reflective conditions of the floor. The acoustic sensor 148 may be configured to identify changes between a first floor type and a second floor type during operation of the robotic cleaner 100. As a robotic cleaner 100 traverses a target surface, noise from the surrounding area may be detected using the acoustic sensor 148. The volume and/or quality of that noise may vary based on the qualities of the floor surface such that the acoustic sensor 148 allows for determination of floor types such as carpet, hardwood, and/or tile based on the reflective conditions of the floor, or a transition from a first type to a second type of floor covering. In some embodiments, the noise that the robotic cleaner generates while moving is used by an acoustic sensor 148 to determine floor type. This noise may be caused by the plurality of wheels 130 traveling over a surface and/or by operation of the suction motor 142. The acoustic sensor 148 may be placed into a recessed chamber within the robotic cleaner chassis 102. In some embodiments, the recessed chamber may be cylindrical, such that the location of the source of ambient noise detected by the acoustic sensor 142 is more readily identified.

Some embodiments include a method for detecting the floor using an ultrasonic sensor 188. The ultrasonic sensor 188 transmits an ultrasonic signal towards the floor surface and receives the ultrasonic signal reflected from the floor surface. The sensor 188 allows for determination of floor types such as carpet, hardwood, and/or tile based on the reflective conditions of the floor. The ultrasonic sensor 188 may be configured to identify changes between a first floor type and a second floor type during operation of the robotic cleaner 100.

An example embodiment of the robotic cleaner 100 includes at least one ultrasonic sensor 188 and at least one acoustic sensor 148. The at least one ultrasonic sensor 188 and the at least one acoustic sensor 148 may operate together to determine a floor surface and/or a change in the floor surface. That is, the at least one ultrasonic sensor 188 may transmit an ultrasonic signal towards the floor surface. The at least one ultrasonic sensor 188 and the at least one acoustic sensor 148 may both receive the reflected signal and use the signals to determine a floor type and/or a change in the floor type. In some embodiments, the at least one ultrasonic sensor 188 may be configured to operate based on signals received by the at least one acoustic sensor 148. That is, should the at least one acoustic sensor 148 determine a change in the floor surface, the at least one ultrasonic sensor 188 may be configured to emit an ultrasonic signal based on that determination.

The robotic cleaner 100 includes a wet cleaning module 149 removably affixed to the robotic cleaner chassis 102. In the illustrated example, the wet cleaning module is positioned aft of the vacuum, the rotating agitator and the rotational axes of the wheels. The wet cleaning module 149 includes a cleaning fluid tank 145 and a stopper 146 for the cleaning fluid tank 145. The cleaning fluid tank 145 is configured as a reservoir for receiving cleaning fluid and extends upwardly from a tank base 120.

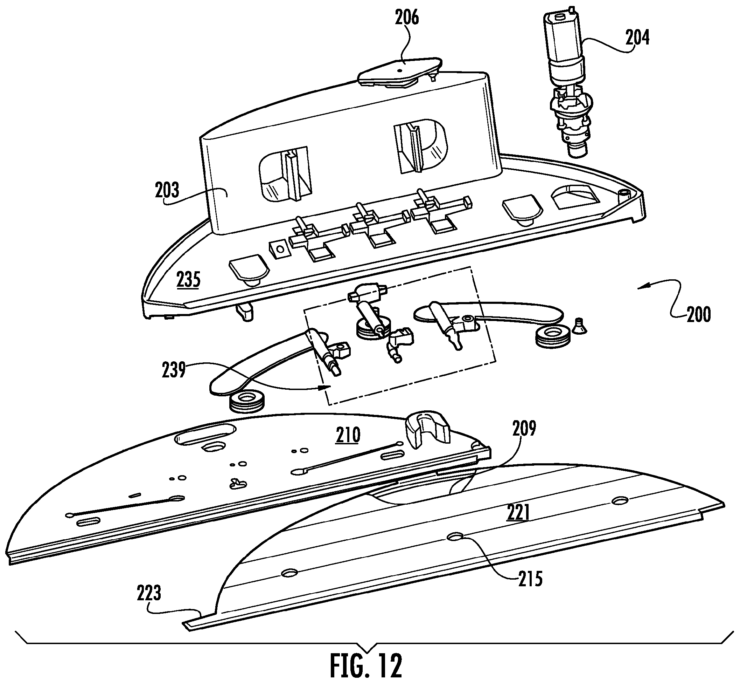

The wet cleaning module further includes a wet cleaning pad 121 operatively coupled to the bottom of the tank base 120, e.g. directly or via a cleaning pad plate (e.g. plate 210 shown in FIG. 12). In some embodiments, a rigid slider 123 on the leading edge 124 of the cleaning pad 121 is slidably received in a channel that is formed in the wet cleaning module, e.g. in the tank base or the cleaning pad plate, to releasably couple the leading edge 124 of the cleaning pad 121 to the wet cleaning module. An end of the slider 123 may extend beyond end surface of the leading edge 124 of the cleaning pad 121 to be exposed at a side (side 116b in the illustrate example) of the housing 102 to allow a user to grasp the slider 123 to remove the cleaning pad 121 from wet cleaning module. In some embodiments, the rigid slider may extend beyond the end surface of the leading edge 124 of the cleaning pad and/or outwardly from the channel by at least about 1cm and, in some embodiments, the slider may extend along only a portion of the leading edge 124 of the cleaning pad 121. The rear of the wet cleaning pad 121 may be coupled to the plate using a hook-and-loop fastener (not shown) and may include a tab 122 to allow a user to couple and decouple the wet cleaning pad 121 from the hook-and-loop fastener by pulling upward or downward on the tab 122.

As the robotic cleaner travels across a floor, the suction conduit 155 connected to the suction motor 142 collects dry debris from the floor while the liquid applicator of the wet cleaning module 149 applies a cleaning fluid onto the cleaning pad 121. The liquid applicator may be provided in a variety of configurations. In some embodiments, the liquid applicator applies cleaning fluid onto the cleaning pad 121at one or more pump outlet locations 189 (hidden lines), and an agitator module agitates the cleaning pad 121 to scrub the floor. The wet cleaning module motor 147 powers one or more pumps of the liquid applicator configured to apply the cleaning fluid onto the cleaning pad 121 and the agitation module to agitate the cleaning pad 121 during cleaning.

A non-driven rear caster wheel 187 supports the wet cleaning module 149. The rear caster wheel 187 improves the ability of the robotic cleaner to cross over thresholds while cleaning and may be used to control the engagement of the cleaning pad 121 with the target surface. The rear caster wheel 187 may be shifted along a vertical axis such that the cleaning pad 121 carried by the robotic cleaner 100 sits closer to, or further from, the surface on which it travels. When the rear caster wheel 187 rotates at a higher axis relative to the bottom of the robotic cleaner 125, the cleaning pad 121 has greater engagement with the floor. This may increase the cleaning effectiveness. However, the increased mechanical engagement with the floor may also produce increased friction from the cleaning pad 121 as it moves over the surface being cleaned. The increased friction may decrease the speed of the robotic cleaner 100. Therefore, the rear caster wheel 187 is adjusted such that the pressure caused by the weight of the robotic cleaner 100 is balanced between cleaning effectiveness and maneuverability of the robotic cleaner 100.

The pressure applied to the cleaning pad 121 may be distributed across the surface area of the cleaning pad 121 engaging with the surface being cleaned, or in an alternative embodiment, the pressure applied to the cleaning pad 121 may be concentrated along the leading edge 124 of the cleaning pad 121. The concentration of the pressure along the leading edge 124 of the cleaning pad 121 can be configured to provide the improved cleaning imparted by increased mechanical engagement with the floor being cleaned while limiting the amount of drag caused by the cleaning pad 121 engagement with the floor. In some embodiments, the cleaning pad may have a leading edge of about 31-34cm in width, and robotic cleaner may have a mass of about 3kg. In some embodiments, the cleaning pad may have a leading edge of about 10-40cm in width, the robot may have a mass of less than about 10kg, and an average drag force between the cleaning pad 121 and the cleaning surface up to about 40% of the weight of the robotic cleaner may be generated during cleaning. This robot size allows the robot to be small enough to maneuver around a home and obstacles therein, and this weight allows the cleaning pad to engage with the cleaning surface, improving cleaning efficiency, while being light enough for a single user to transport the robot around a home.

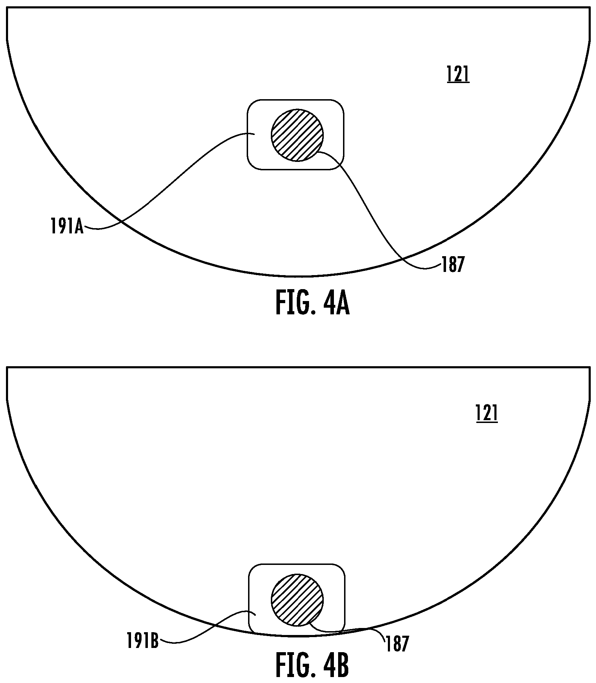

Referring now to FIGS. 4A and 4B, the rear caster wheel 187 may be located in myriad locations on a robotic cleaner chassis. An aperture 191A or notch 191B may be located within a cleaning pad 121 to accommodate the rear caster wheel 187. The engagement of the cleaning pad 121 with a surface is operability controlled in part by the caster wheel 187. In order to provide increased balance and maneuverability, the caster wheel 187 may be located along a center line of a fore-aft axis. As shown in FIG. 4A, the rear caster wheel 187 may be located such that it is enclosed within the boundaries of a cleaning pad 121. The aperture 191A or cutout for the caster wheel 187 may be located within the boundaries of the cleaning pad 121 anywhere on the fore-aft axis. The width of the border of the cleaning pad 121 that surrounds 191A the rear caster wheel 187 does not need to be equal. That is, the rear caster wheel 187 may be located more towards the front or rear of the robotic cleaner while still being surrounded 191A by the cleaning pad 121. In an embodiment illustrated in FIG. 4B, the rear caster wheel 187 may be partially surrounded 191B by the cleaning pad 121. In such an embodiment, the rear caster wheel 187 may be located within a notch or cutout 191B in the perimeter of the cleaning pad 121.

In both FIG. 4A and 4B, the space that the rear caster wheel 187 occupies is depicted as a rectangle with rounded corners 191A 191B . However, alternative embodiments for cleaning pads 121 that can accommodate caster wheels 187 are envisioned. Such designs include circular, square, oval or irregular shapes designed to accommodate the rear caster wheel 187.

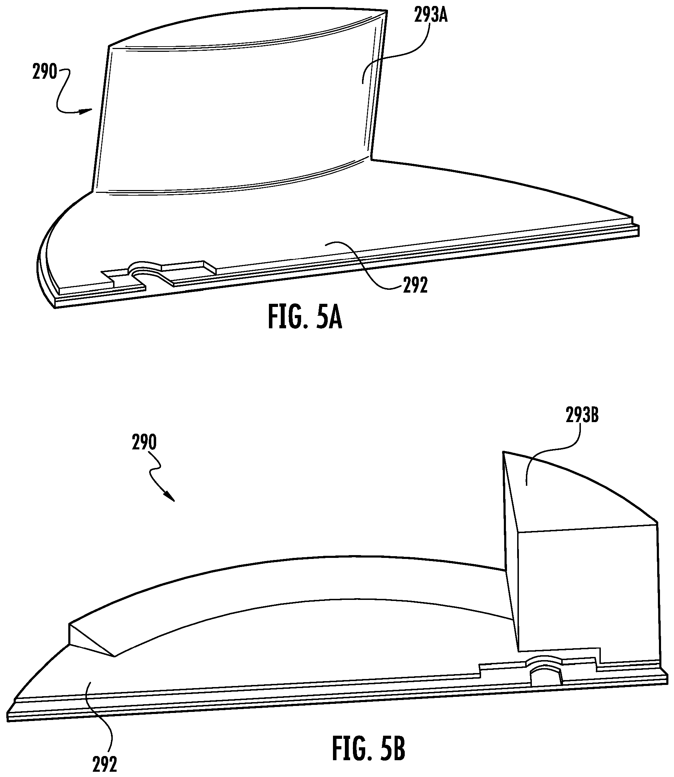

FIGS. 5A and 5B illustrate different configurations that may be used to construct a wet cleaning module 290. The wet cleaning module 290 includes a cleaning fluid storage container or cleaning fluid tank 293A, 293B that extends upwardly from a tank base 292. The tank 293A, 293B may be integrally formed with the tank base 292 or may be a separate component attached to the tank base 292. The cleaning fluid tank 293A 293B may be constructed to hold a volume of a cleaning fluid. In an example embodiment, the volume of the cleaning fluid may be approximately 200-300 mL. The cleaning fluid may be water or a mixture of water and soap or detergent that may further include other components such as a solvent, a fragrance, a disinfectant, a drying agent, abrasive particulates and the like to increase the effectiveness of the cleaning process or improve the end-results such as floor appearance. The mixture may be provided in a concentrated state and may be composed to work within the wet cleaning module 290.

The wet cleaning module 290 attaches to a robotic cleaning apparatus. In some embodiments, e.g. as in the illustrated embodiments, the wet cleaning module is coupled to the chassis aft of the vacuum. Embodiments of robotic cleaning apparatuses may include a vacuum component may be constructed such that the cleaning fluid tank 293A 293B is located fore or aft of a dust cup or dry debris storage container. FIG. 5A illustrates a cleaning fluid tank 293A that is configured to sit aft of a dust cup. FIG. 5B illustrates a cleaning fluid tank 293B that sits to the left of a dust cup. In both embodiments, the cleaning fluid tank 293A 293B is constructed such that a user may grasp the wet cleaning module 290 and remove it from a robotic cleaning apparatus.

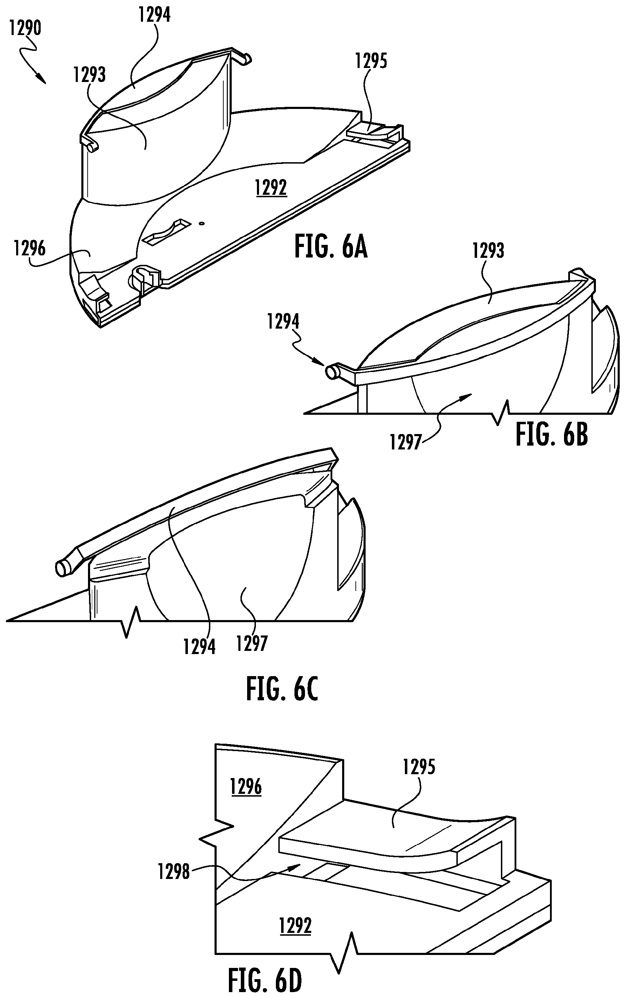

FIGS. 6A-6D illustrate an example attachment mechanism configured to couple the wet cleaning module 1290 to a robotic cleaner housing. The wet cleaning module 1290 includes a latch 1294 that may be mounted to a robotic cleaner chassis to pivot when engaged by the user. The latch 1294 may be configured to mechanically engage with a cleaning fluid tank 1293 that is a part of the wet cleaning module 1290. The cleaning fluid tank 1293 may further include an indented portion 1297 constructed to allow a user to more easily engage the latch 1294. Mounting brackets 1295 that include internalized curved ramps 1298 may be configured to allow for forward mounting of the wet cleaning module 1290.

The movement to remove the wet cleaning module 1290 may consist of releasing the latch 1294 and pulling or sliding the wet cleaning module 1290 away from the robotic cleaning apparatus without having to displace or remove other parts of the robotic cleaning apparatus. The wet cleaning module 1290 may be removed by a user pulling the module in a horizontal direction, such that the robotic cleaning apparatus remains on the floor or otherwise in a level position during the removal of the wet cleaning module. Further, the cleaning fluid tank 1293 remains level, such that any cleaning fluid does not spill out of the wet cleaning module 1290 during removal. The cleaning fluid tank 1293, tank base 1292 and transition portion 1296 between the tank 1293 and the tank base 1292 are shaped such that the contours of the wet cleaning module 1290 fit within a rounded chassis profile of the robotic cleaning apparatus.

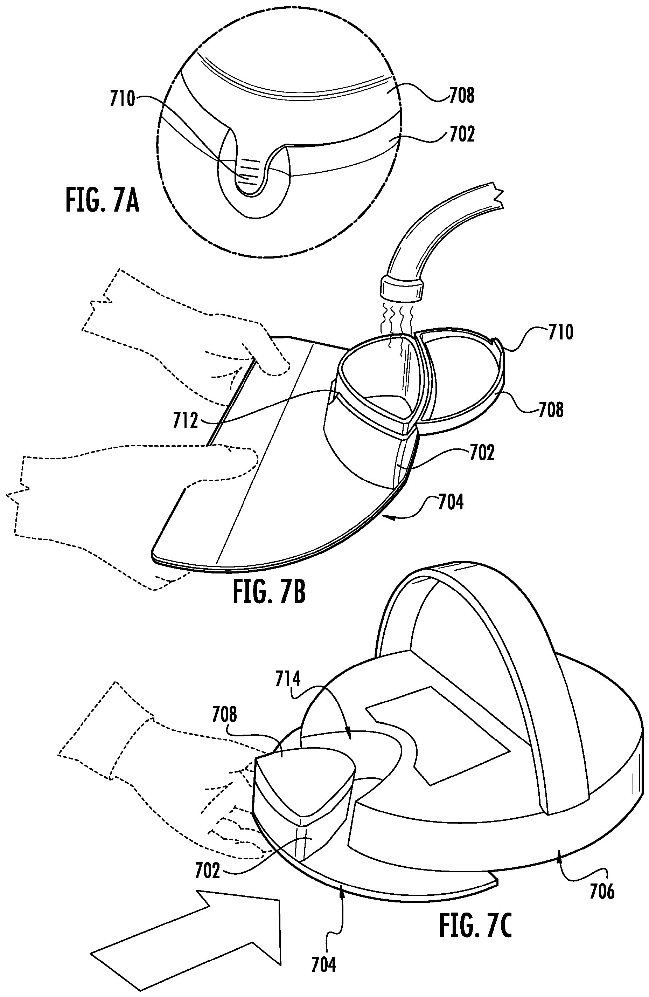

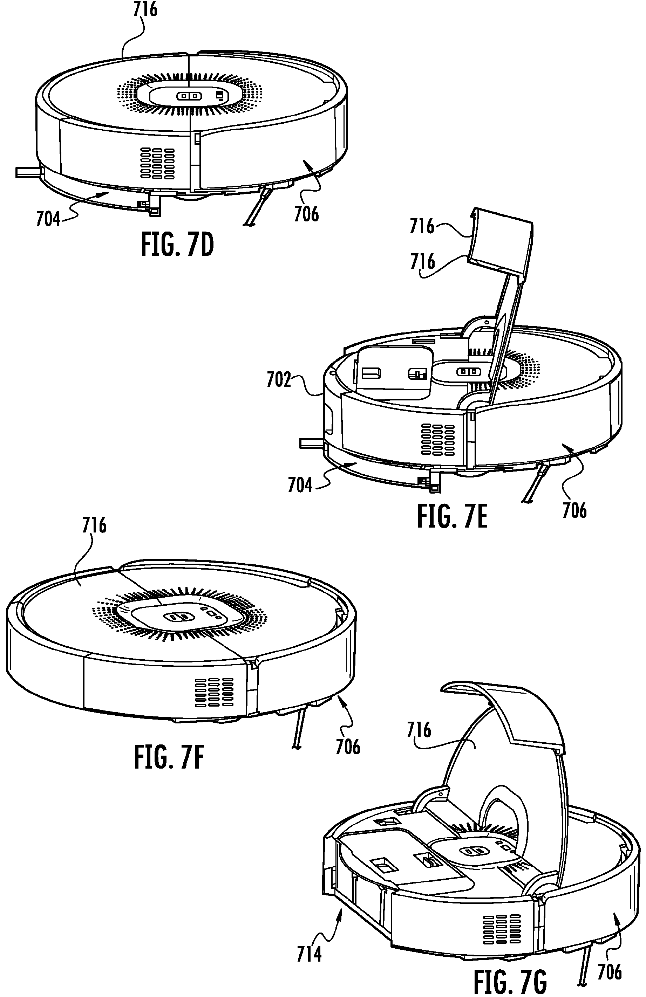

FIGS. 7A-C illustrates the process for a user to fill a cleaning fluid tank 702 for a wet cleaning module 704 and reattach the wet cleaning module 704 to a robotic cleaner housing 706 consistent with embodiments of the present disclosure. In some embodiments, the tank portion 702 of the wet cleaning module 704 may have a cover 708 pivotably attached at a rear thereof. The cover 708 may include a downwardly extending latch 710 for engaging a catch 712 on the front side wall of the tank for latching the cover in a closed position. To fill the tank 702, a user may open the tank by lifting up on the latch 710 to pivot the cover 708 to an open position as shown in FIG. 7B. The user may then fill the tank portion 702 with cleaning fluid, e.g. water, pivot the cover 710 to a closed position, and couple to the wet cleaning module 704 to the housing robotic cleaner housing 706 by sliding the module 704 into a wet module attachment location 714 in the housing 706, as shown in FIG. 7C. In many embodiments, the wet cleaning module may be removed using one step and allowing a user to use only one hand.

As illustrated in FIGS. 7D-7G, in some embodiments, a pivoting chassis cover 716 may be configured to fit over the wet cleaning module attachment location 714, such that the external chassis forms a circular structure when the wet cleaning module 704 is attached and also in the absence of the wet cleaning module. FIGS. 7D-7E illustrate a wet cleaning module 704 attached to the chassis 706, consistent with embodiments of the present disclosure. FIGS. 7D-7E illustrate the chassis 706 shown in FIGS. 7F-7G without a wet cleaning module 704 attached. As shown, the cover 716 may be pivotally attached to a central area of the chassis 706. To install or remove the wet cleaning module 704, the cover may be pivoted upward to expose the wet cleaning module 704 or wet cleaning module location 714.

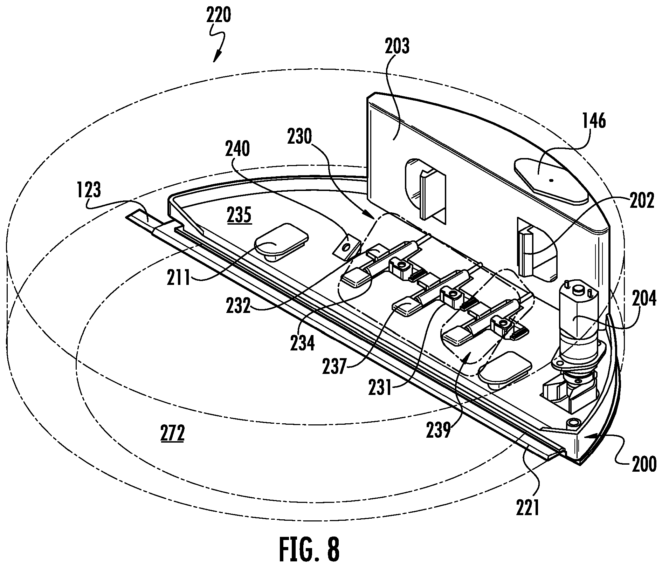

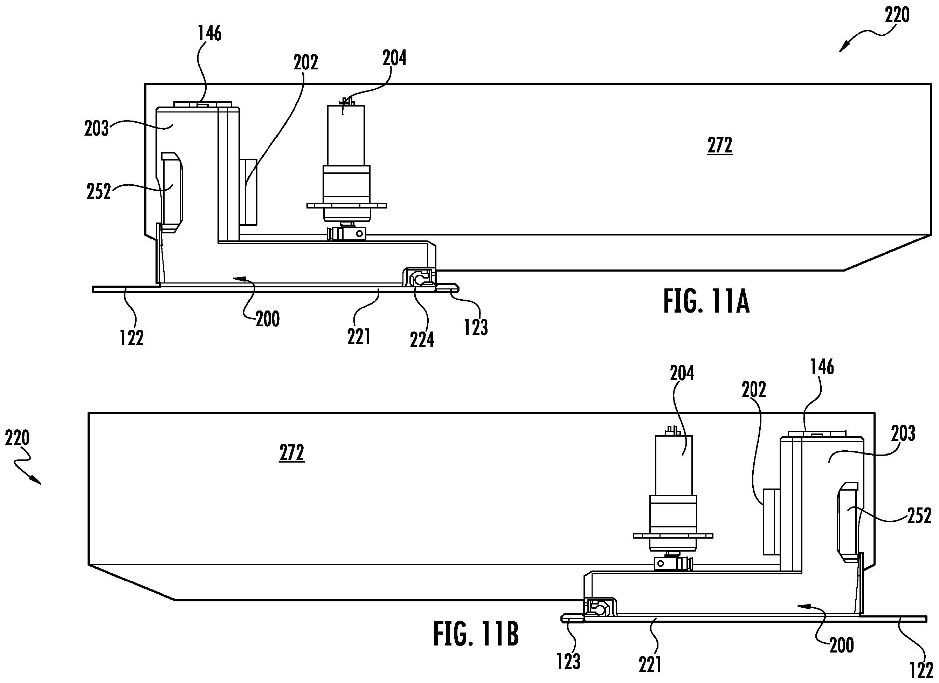

Referring to FIGS. 8-12, another example of a robotic cleaner 220 consistent with embodiments of the present disclosure, is shown and described. FIGS. 8-12 more fully illustrate an example wet cleaning module 200. The robotic cleaner 220 transports one or more cleaning modules, e.g. a vacuum and/or a wet cleaning module, during operation. The wet cleaning module 200 is configured to perform wet cleaning by applying a cleaning fluid onto a cleaning pad 221, and agitating the cleaning pad 221 to scrub a target surface. The wet cleaning module 200 is further configured to store a supply of the cleaning fluid therein using a cleaning fluid storage container, compartment, bladder, or tank 203 and to deliver the cleaning fluid to the cleaning pad 221 using a liquid applicator, which in the illustrated example embodiment is configured as a pump assembly 230. The pump assembly 230 contains one or more pumps 239 that are configured to isolate the cleaning fluid from any electrical components contained with the robotic cleaner 220, including a wet module motor 204.

In some embodiments, portions of the robotic chassis 272 are sealed to prevent liquid ingress. In some embodiments, the sealing includes adhering plastic film to a top cover of the robotic cleaner 220. Gaps between the plastic film and the top cover may be sealed using a foam adhesive or felt seal. In other embodiments of the robotic cleaner, a method for the prevention of liquid ingress includes applying an overmold between the exterior of the robotic cleaner 220 and a PCBA. Overmolds formed from an elastomer material may be used. An additional piece, such as a portion of the robotic cleaner chassis 272, may be used to clamp the elastomer material to the interior of the robotic cleaner 220 to form a seal that prevents any liquid from entering the PCBA.

FIGS. 8-12 illustrate an example attachment mechanism configured to couple a wet cleaning module 200 to the robotic cleaner chassis 220. In the illustrated example, the wet cleaning module 200 includes a latch 202 that may be coupled to a robotic cleaner chassis and that releases when engaged by the user. The latch 202 may be placed on the exterior face of the cleaning fluid tank 203 that remains accessible to a user when the wet cleaning module is attached to the robotic cleaner 220. In the illustrated embodiment, the cleaning fluid tank 203 is attached to the chassis using a latching mechanism 202 that may be released by the user using a horizontal pinching motion. In an alternative configuration, the attachment may be released by the user using a vertical pinching motion.

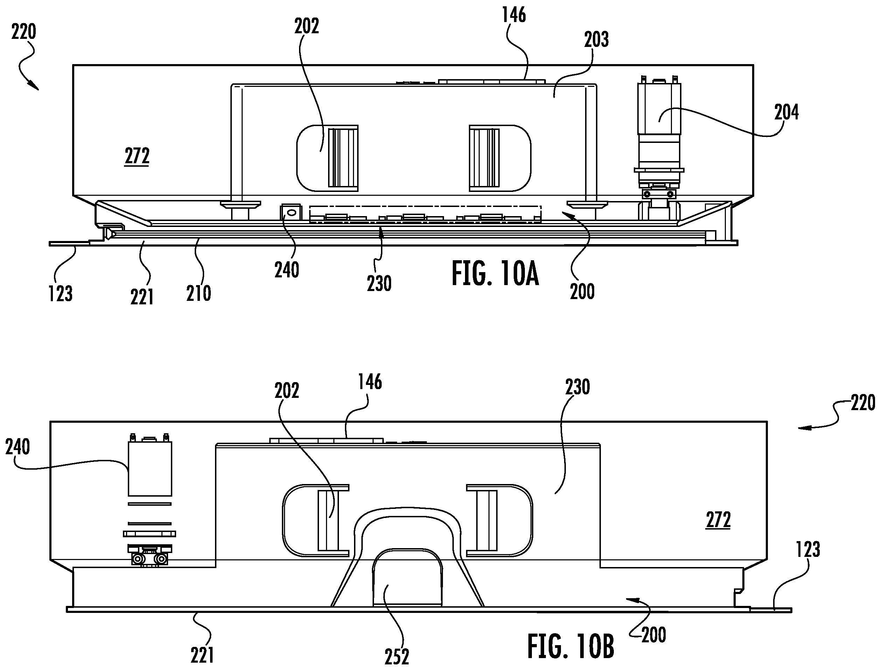

The wet cleaning module 200 may further include one or more brackets or clasps 211 constructed to allow forward mounting and attachment of the wet cleaning module 200 into the robotic cleaner 220. As seen on FIGS. 10A and 10B, a rear attachment point 252 on the cleaning fluid tank 203 provides an attachment point for a cleaning pad 221.

The wet cleaning module 200 may be removed by a user pulling the wet cleaning module 200 in a horizontal direction away from the back of the robotic cleaner 220, such that the robotic cleaner 220 remains level with respect to a horizontal plane during the removal of the wet cleaning module 200. Further, the cleaning fluid tank 203 remains level, such that any cleaning fluid does not spill out of the wet cleaning module 200 during removal. The cleaning fluid tank 203 is shaped such that the contours of the wet cleaning module 200 fit within a rounded chassis profile of the robotic cleaning apparatus. As described above and as illustrated in FIGS. 7A-7G, in some embodiments, a pivoting chassis cover 716 may be configured to fit over the wet cleaning module 200 attachment location, such that the external chassis forms a circular structure when the wet cleaning module 200 is attached and also in the absence of the wet cleaning module 200.

The wet cleaning module 200 further includes the above mentioned liquid applicator configured as a pump assembly 230. Portions of the pump assembly 230 may be fixed to a tank base 235 or a cleaning pad plate 210. The pump assembly 230 may include at least one peristaltic pump 239, which may be a linear peristaltic pump. The at least one peristaltic pump 239 includes a tube 234, an actuator 231 an actuator anvil 232 and one or more valves 237.

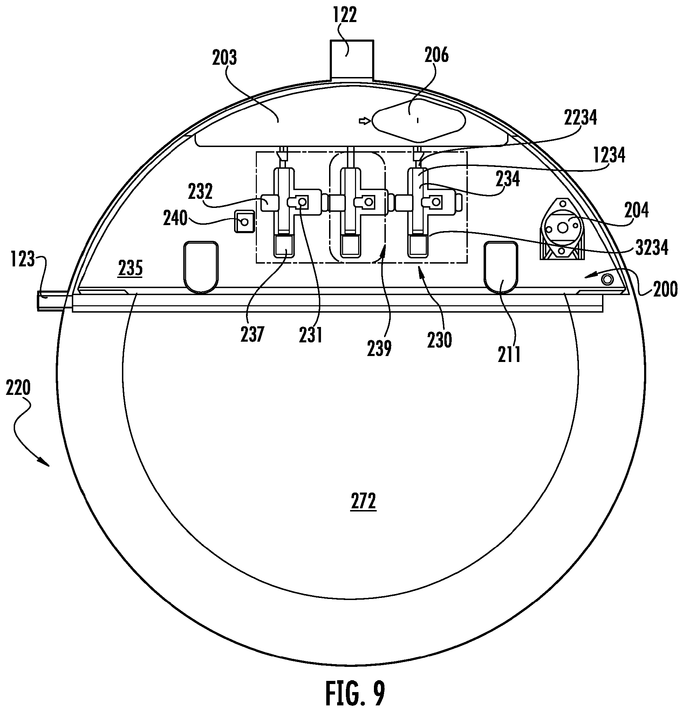

As illustrated in FIG. 9, the at least one peristaltic pump includes a chamber 234 for receiving and discharging cleaning fluid, and an actuator 231 for squeezing the camber 234 to pump fluid through the chamber 234. The chamber has a first end with a first opening 1234, a second end with a second opening 3234, and a length of resilient tubular material 2234 extending between the first 1234 and second openings 3234. One-way valves 237 disposed at the openings cooperate to permit fluid to pass through the chamber 234 in only one axial direction. The squeezing mechanism includes a substantially rigid anvil 232 and a substantially rigid displaceable actuator 231. The tubular material 2234 is mounted such that one surface is placed against the anvil 232 and the actuator 231 is aligned to alternately squeeze the tubular material 2234 against the anvil 232 to pump fluid out of the chamber 234 and release the tubular material 2234 from the anvil 232 to draw fluid into the chamber 234.

The actuator 231 may be mounted with respect to a tank base 235 of the wet cleaning module 200, and the tubular fluid pump 239 may further include a motor 204, mounted to the tank base 235 for moving the actuator 231 relative to the chamber 234 of the pump 239. For example, the motor 204 may urge the actuator 231 toward and away from the chamber 234 along a path of motion defining a straight axis. Alternatively, the motor 204 may operate so as to rotate a shaft and define an axis of rotation, in which case the motor rotates the actuator 231 about the axis of rotation defined by the motor 204.

The pump 239 further includes the length of flexible tubing or hose 2234 having a one-way inlet valve (not shown) at the inlet of the hose connected to a water reservoir and a one-way outlet valve 237. The flexible tubing or hose 2234 may be mounted on the wet cleaning pad plate 210. The inlet and outlet valves 237 may include an umbrella valve, a duckbill valve, or another type of check valve configured to control the flow of cleaning fluid through the pump 239.

In some embodiments , the at least one peristaltic pump 239 ejects a flow of cleaning fluid in accordance with an operating mode and wherein the flow rate is determined based on the information provided by a detection element 240. In some embodiments, the detection element 240 is a humidity sensor 340 elevated above the position of the cleaning pad 221, and further includes an opening directed towards the cleaning pad 221 in which the humidity sensor is situated. In some operating modes, the flow rate is 3.5 mL/min. In some operating modes, the flow rate is approximately 5 mL/min. During a cleaning operation, the flow rate may vary, and include a range from approximately 0.0mL/min to 5mL/min. In some embodiments, each of the at least one pumps 239 may be configured with an independent mechanical actuator 231. The size of the mechanical actuator 231 may vary based on the placement of the pump 239 within the robotic cleaner 220 (e.g. a pump 239 located in the center may use a larger mechanical actuator 231 and thereby provide a higher flow rate that one located on the edge of the robotic cleaner 220).

FIG. 12 illustrates an exploded view of the wet cleaning module 200 shown in FIG. 8. The cleaning fluid tank 203 extends upwardly from a tank base 235. As discussed above, the pump actuator is fixed to the tank base 235. Portions of the pump system that transport fluid 239 are attached to the cleaning pad plate 210. The wet cleaning module 200 is configured to isolate the cleaning fluid from any electrical components contained with the robotic cleaner 220, such as the wet module motor 204.

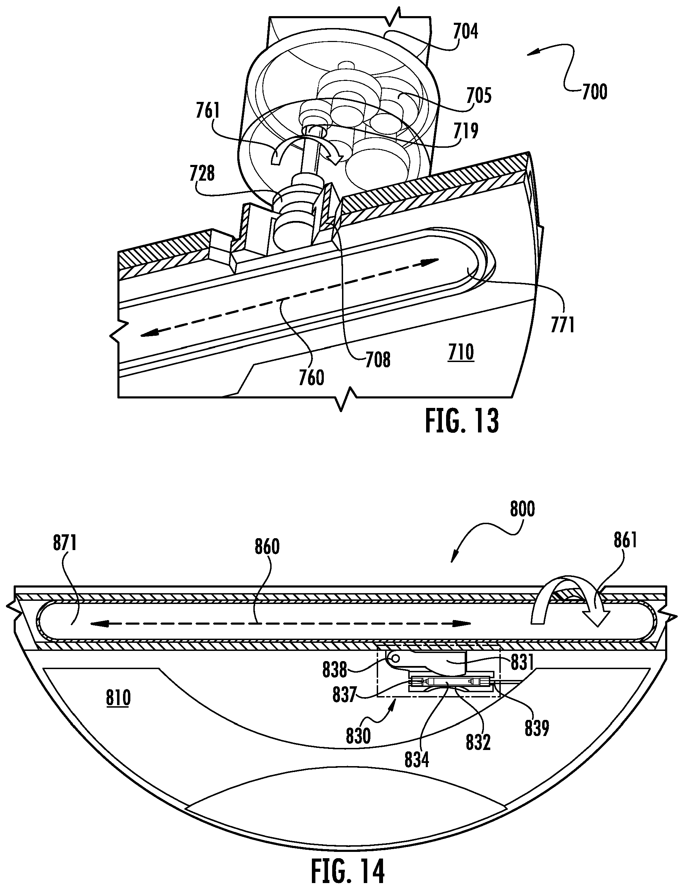

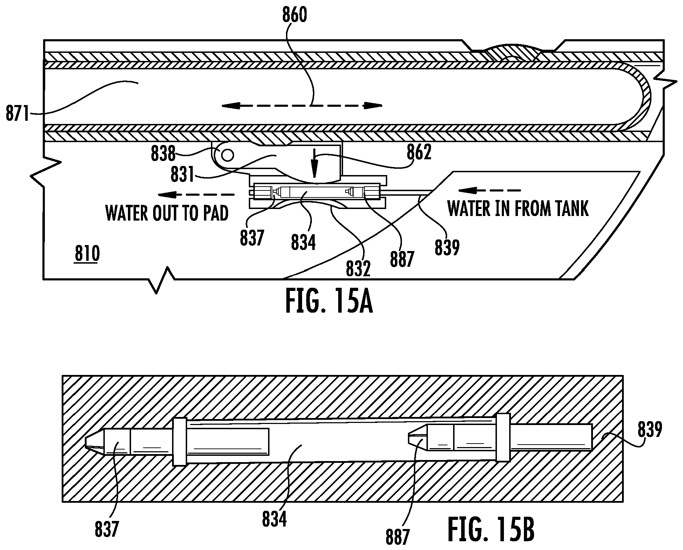

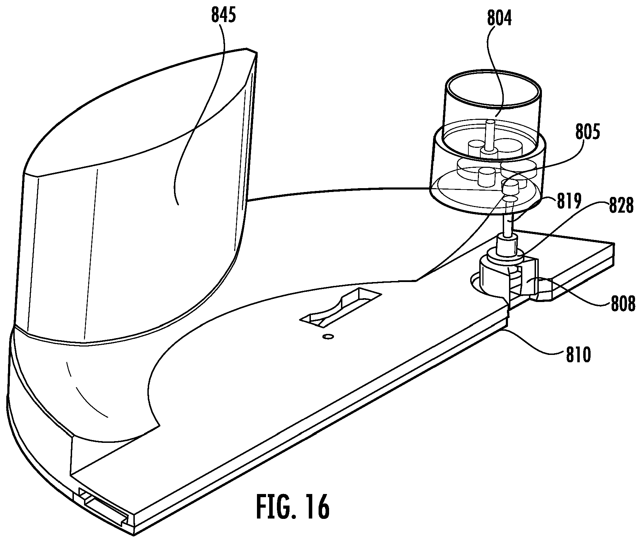

FIGS. 13-16 illustrate a wet cleaning module 700, 800 consistent with embodiments of the present disclosure. Specifically, FIGS. 13-17 illustrate the use of a wet cleaning module motor 704, 804 used to power a pump assembly 830 and provide agitation to a cleaning pad plate 710, 810. FIG. 13 is a schematic diagram of the wet cleaning module motor 704 and an agitation module configured to impart agitation to the cleaning pad to scrub a floor surface. The agitation module may be provided in a variety of configurations. In the illustrated example embodiment, the agitation module includes a coupling 728, a collar 708 and a sideways cam mechanism 771.

A gear train 705 is coupled to the motor for driving a drive shaft 710. The drive shaft 719 rotates (shown in arrow 761) around a fixed axis, powered by the wet cleaning module motor 704. The drive shaft 719 is attached to the coupling 728, which mechanically interfaces with a collar 708 attached to the sideways cam mechanism 771. The sideways cam mechanism 771 converts rotational motion of the motor 704 and drive shaft 719 to linear motion coupled to the cleaning pad plate to agitate the cleaning pad plate 710. The agitation described by the arrow 760 provides a scrubbing action as a robotic cleaner moves across a surface that it is cleaning.

Non-limiting alternative embodiments envisioned include: agitation of the cleaning pad along a vertical axis during the cleaning mode, agitation of the cleaning pad in an elliptical or circular motion such that the cleaning pad moves in a helical path along the surface being cleaned, and/or agitation of the cleaning pad in a pendulum pattern, such that one side of the pad is driven towards the floor while the other side lifts from the floor during the cleaning mode.

Referring to FIGS. 14-16, the wet cleaning module motor 804 is further configured to power the liquid applicator configured as a pump assembly 830 which provides cleaning fluid from a cleaning fluid tank 845 to a cleaning pad (not shown), and the agitation module. FIGS. 14-16 are schematic diagrams of the wet cleaning module motor 804 and a gear train 805 coupled to the cleaning pad plate 810 through the agitation module including a coupling 828, collar 808 and sideways cam mechanism 871. A drive shaft 819 rotates (shown in arrow 861) around a fixed axis, powered by the wet cleaning module motor 804. The drive shaft 819 is attached to the coupling 828 that mechanically interfaces with a collar 808 attached to the sideways cam mechanism 871 that has approximately 1/8 inch amplitude of travel in the specific embodiment illustrated. Amplitudes of travel from 1/16 inch to 1/4 may be used in various embodiments of the present disclosure. The sideways cam mechanism 871 agitates the cleaning pad plate 810. The agitation described by the arrow 860 provides a scrubbing action as a robotic cleaner moves across a surface that it is cleaning. The sideways cam mechanism 871 further actuates the pump assembly 830. The lateral motion 860 of agitator mechanically interfaces with a pump actuator 831. The pump actuator has a pivot point 838 allowing it to rotate about the pivot point 838 shown by arrow 862 and compress a tube 834 carrying cleaning fluid against an actuator anvil 832.

The chamber has an inlet opening 839 with a first one-way valve 887 and a second one-way valve 837 operating cooperatively to permit fluid to pass through the tube 834 in only one axial direction. The pump actuator 831 is aligned to alternately squeeze the tubular material 834 against the anvil 832 to pump fluid out of the tube 834 and release the tubular material 834 from the anvil 832 to draw fluid into the 834 from an inlet opening 839. A filter may be situated in a cleaning fluid tank 845 to remove any debris from the cleaning fluid before the cleaning fluid passes through the inlet opening 839.

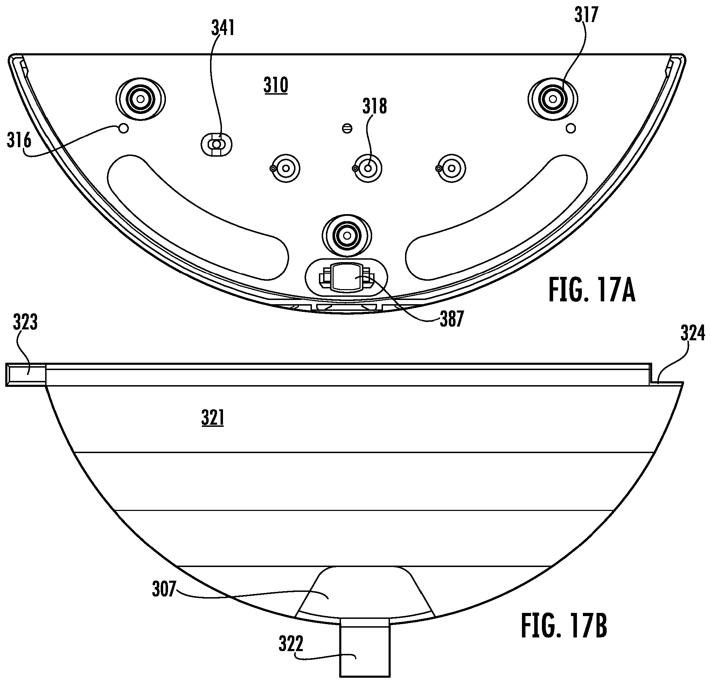

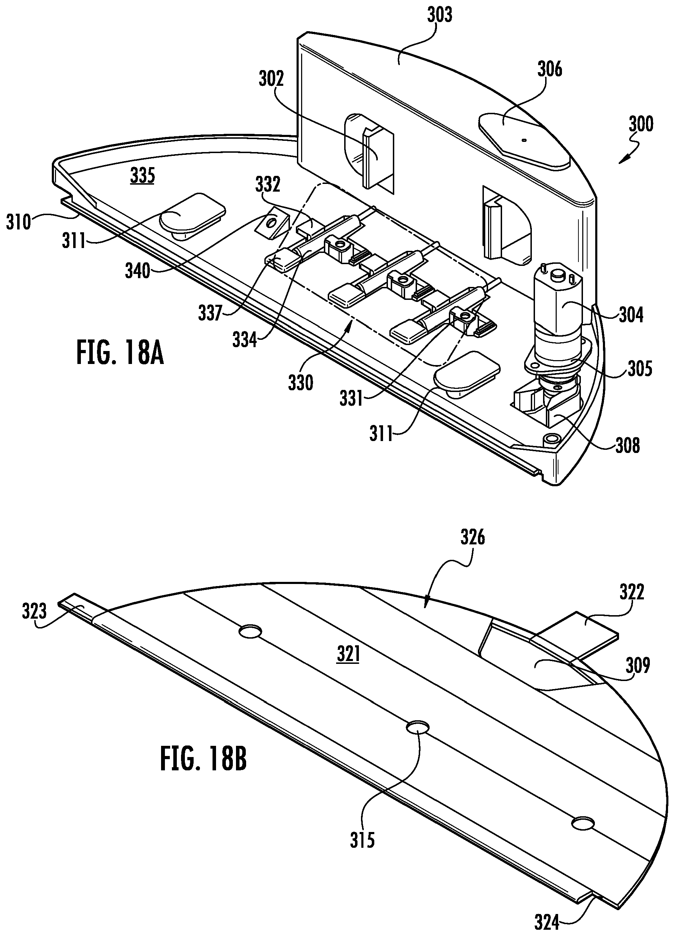

The robotic cleaner operates in a wet cleaning mode by agitating a cleaning pad across a targeted surface when the robot cleaner is stationary and as the robot cleaner travels over the cleaning surface. In some embodiments, the cleaning pad is attached to the robotic cleaner using a cleaning pad plate. Cleaning liquid is pumped onto the cleaning pad during the cleaning operation. FIGS. 17A-18B illustrate embodiments of a cleaning pad plate 310 and a cleaning pad 321 consistent with embodiments of the present disclosure. A wet cleaning module 300 as illustrated in FIG. 18A is attached to a robotic cleaner using one or more latching mechanisms 302 and/or brackets or clasps 311. A pump assembly 330 is used to apply a cleaning fluid onto the cleaning pad 321. One or more outlet valves 337 coupled to one or more pumps 330 pump the cleaning fluid through one or more cleaning fluid egress points 316. One or more points 315 on the cleaning pad 321 are configured to allow the cleaning fluid to be distributed through the cleaning pad surface. In some embodiments, tubing is coupled to the one or more outlet valves 337 to direct the cleaning fluid onto the cleaning pad 321. A caster wheel 387 is positioned such that the cleaning pad 321 does not interfere with the movements of the caster wheel 387 during cleaning operations.

Agitation of the cleaning pad 321 is generated by a wet cleaning module motor 304 driving at least one sideways cam of an agitation module. At least one cam fastening point 318 couples the linear motion of the at least one sideways cam to the cleaning pad 321. The cleaning pad 321 may be attached to the cleaning pad plate 310 using one or more fasteners 317. Additional fastening mechanisms are described in further detail below.

The cleaning pad 321 has a leading edge 324 at a forward portion of the cleaning pad 321 and a trailing or rearward portion 326. In the illustrated embodiment the cleaning pad is generally D-shaped, and the leading edge 324 of the cleaning pad is position aft of the rotational axes of the wheels 130. In some embodiments, the cleaning pad has maximum length defined by the length of the leading edge of between 10-40cm and a maximum width less than about 60% of the maximum width.

In some embodiments, agitation is imparted at the forward portion or leading edge 324 of the cleaning pad 321. In some embodiments, for example, agitation may be imparted by providing a cam fastening point 318 for directly coupling the linear motion of the agitation module, e.g. the at least one sideways cam, to the cleaning pad 321 at a forward portion of the cleaning pad without directly coupling the agitation module to the rear portion of the cleaning pad. In some embodiments, for example, the cam fastening point 318 may be positioned within 5cm from the leading edge 324 of the cleaning pad 321. In other embodiments, the cam fastening point 318 may be provided within 2.5cm from the leading edge 324 of the cleaning pad 321. No other cam fastening points may be provided to couple the cleaning pad 321 to the plate 310 rearward of the leading edge cam fastening points.

The rear portion of the cleaning pad is indirectly coupled to the agitation module, e.g. in some embodiments by virtue of the cleaning pad being a single component with the rear portion trailing the forward portion Although this results in agitation of the entire cleaning pad 321, directly imparting the agitation at the leading edge 324 of the cleaning pad provides a number of advantages over directly imparting agitation along length of the cleaning pad 321 and the cleaning plate 310. By using a sideways cam located at the leading edge of the cleaning pad 321, the forward portion of the cleaning pad 321 engages debris prior to the rest of the cleaning pad passing over the debris. Directly imparting the agitation at the forward portion of the cleaning pad, allows the agitation to loosen any debris while allowing the trailing portion of the cleaning pad to absorb any loosened debris.

By imparting the agitation at the leading edge 324 of the cleaning pad 321, the distribution of the cleaning fluid can be more easily controlled. The trailing edge of the cleaning pad 321, although still agitated by the agitation imparted to the leading edge of the cleaning pad, is less mobile than the leading edge. The one or more outlet valves 337 may be located in the trailing portion of the cleaning pad 321. The pump assembly 330 would be directing cleaning fluid to a relatively stable surface rather than to an agitating pad plate. This allows a more controlled distribution of cleaning fluid to specific locations such as the one or more points 315 on the cleaning pad 321 configured to allow the cleaning fluid to be distributed through the cleaning pad surface.

Additionally, in some embodiments, the use of a leading edge agitator instead of agitating the entire length of the cleaning plate 310 allows for a larger cleaning tank 303. The cleaning tank 303 holds cleaning fluid that is applied to the cleaning pad 321. In many embodiments, the size of the cleaning tank 303 determines the overall area that can be cleaned by a robotic cleaner during its operation. Localizing the agitation mechanism to the leading edge of the cleaning pad 321 allows for a cleaning tank 303 that extends further towards the cleaning pad. In some embodiments, the lower surface of the cleaning tank 303 may form at least a part of the surface of the cleaning plate 310.

Moreover, a leading edge agitator may reduce the amount of surface of the chassis for a robotic cleaner that is being actively moved in a sideways direction. If a navigation system uses a gyroscope or IMU, large areas of agitation may interfere with navigation of the robotic cleaner during operation. A leading edge agitator may also allow for decreased mechanical stress in the agitation mechanisms since the total force being applied by the mechanism is in-line and centered on the wet cleaning module motor 304.

In some embodiments, the cleaning pad 321 is constructed of a microfiber material. The cleaning pad 321 may be formed such that the materials withstand water and temperature extremes sufficient for the cleaning pad 321 to be washed in a washing machine or dishwasher. The microfiber material may include one or more weave patterns. These weave patterns may include looped fabric, waffle weave, cut loops, coral fleece, microfiber suede, dual pile, pearl towel, and/or twisted pile.

In another embodiment, the cleaning pad 321 is constructed from a disposable material. The cleaning pad 321 may be formed of any suitable material and may be made of a single layer or multiple layers. In some embodiments, the cleaning pad 321 includes multiple layers such as a multifunctional strip, a face layer, and one or more absorbent layers. The face layer and one or more absorbent layers may be made from various non-woven materials, woven materials, and/or plastics, or any other suitable materials. The face layer may be made with a hydrophobic material. The hydrophobic material may be arranged such that the weight of the unit puts a pressure on the layer such that liquid is allowed to penetrate the layer from the floor, but the material is able to help hold acquired liquid within the sheet. The face layer may include a texture such as an embossed three-dimensional pattern to aid with capturing debris from the floor. The face layer may include a PET spunlace that is hydroentangled. In another embodiment, the one or more absorbent layers may be configured to wick moisture away from the face layer. The one or more absorbent layers may be formed of thermal bonded airlaid. A first absorbent layer may be formed with a suitable percentage of bi-component to increase mechanical stability and reduce wet collapse. A second absorbent layer may have a higher density airlaid than the first absorbent layer to promote liquid migration. The higher density airlaid provides mechanical structure to reduce compression and retain liquid. The multifunctional strip may be formed with hydrophilic meltblown polypropylene in some embodiments. By using a hydrophilic material, the sheet may provide a more even wipe to reduce streakiness. The strip may help to break up stains in some embodiments.

In some embodiments, the robotic cleaner includes a detection element 340 attached to the wet cleaning module configured to provide an output to the controller 139 representative of a level of saturation of the cleaning pad and/or the amount of cleaning fluid in the cleaning module tank. In some embodiments, the detection element 340 is a humidity sensor 340 elevated above the position of the cleaning pad 321, and further includes an opening 341 directed towards the cleaning pad 321 in which the humidity sensor is situated.

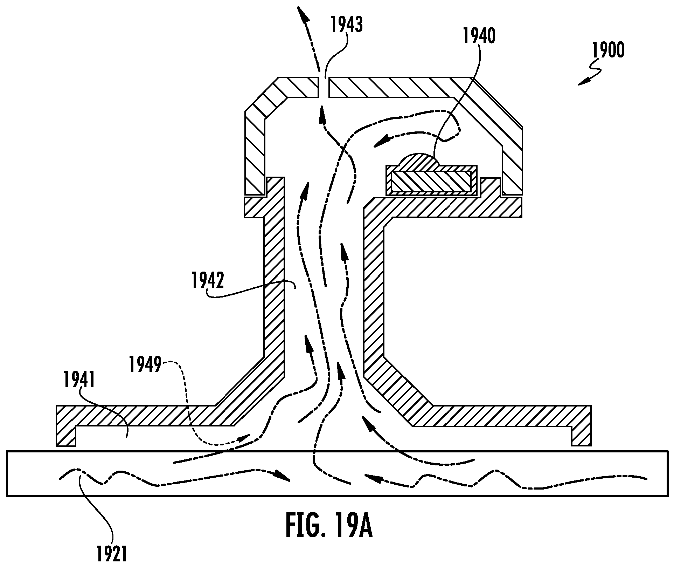

An example embodiment of such a sensor is illustrated in FIG. 19A wherein a sensor assembly 1900 is configured to detect conditions during the operation of a robotic cleaner. The sensor assembly 1900 includes a humidity sensor 1940 elevated above a cleaning pad 1921. The sensor assembly 1900 further includes an opening 1941 directed towards the cleaning pad 1921 and a vent 1943 connected to an interior space of a wet cleaning module. The humidity sensor 1940 is situated such that it is not directly exposed to cleaning fluid being used during the cleaning operation. Air 1949 traveling through the sensor assembly 1900 allows the humidity sensor 1940 to detect the amount of moisture in the air circulating near the cleaning pad 1921. Other systems within the robotic cleaner may direct the air traveling 1949 through the sensor assembly 1900. In particular, the humidity sensor 1940 detects humidity levels in the surrounding air. Stagnant air around the humidity sensor 1940, may prevent the detection of changes in cleaning pad 1921 saturation levels. Thus, the air traveling 1949 through the sensor assembly 1900 should be actively moving from the cleaning pad 1921 and towards the humidity sensor 1940. This active airflow allows for the dynamic detection of current humidity levels of the cleaning pass 1921.

Specifically, a portion of air moving through a suction motor may follow a path constructed within a robotic cleaner chassis that directs the air under the robotic cleaner chassis and towards the sensor assembly 1900. Alternatively, exhaust ejected from an air outlet may be configured to exhaust air from the suction motor under the robotic cleaner chassis and towards the sensor assembly 1900. In some embodiments, the chassis of the robotic cleaner may be shaped such that the forward movement of the robotic cleaner causes an airflow under the robotic cleaner chassis and towards the sensor assembly 1900. The shaping may consist of a scoop or funnel shaping as a part of the robotic cleaner chassis that directs an air path.

The humidity sensor 1940 generates signals in response to detecting the humidity level to a controller. The controller may use the signals in order to determine the moisture saturation of the cleaning pad 1921 based on the humidity of the air above the cleaning pad 1921. The controller configured to receive the signals may be further configured to implement operating modes in response to the determined moisture saturation of the cleaning pad 1921. The operating modes may include determining or altering a flow-rate of cleaning fluid pumped onto the cleaning pad by at least one pump.

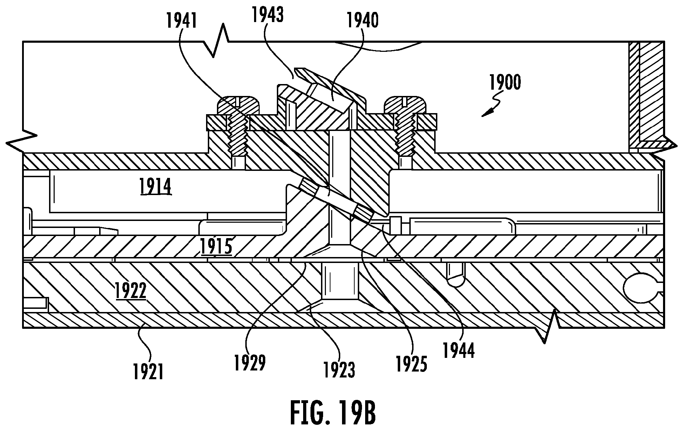

In some embodiments, at least one pump ejects a flow of cleaning fluid in accordance with an operating mode; the flow may be determined by the controller based on the signal information provided by the humidity detector 1940. The controller governing the robotic cleaning device may further adjust an autonomous transport drive subsystem in accordance with predefined operating modes and in response to conditions sensed by the humidity detector 1940. Such adjustments may include speed, agitation, type of agitation, and/or direction of travel. That is, a robotic cleaner may slow down, stop, speed up, increase agitation, etc. in response to conditions sensed by the humidity detector 1940. As shown in FIG. 19B, a humidity detector 1940 may be situated on a bottom of a robot chassis 1914 within a sensor assembly 1900. The humidity detector 1940 is placed in a sealed box located, which in some embodiments may be at least 10mm away from any heat sources within the robotic cleaner. In some embodiments, the humidity sensor is less than 40mm total vertical distance from the floor. The pathway that air takes from the wet cleaning pad 1922 and towards the humidity detector 1940 is controlled to provide consistent results. The diameter of the airpath may be 2-4 mm, but may be larger to increase total airflow through the sensor assembly 1900.

The placement of the air ingress point should be located near where cleaning fluid is applied to the wet cleaning pad 1922, or near attachment points connecting the wet cleaning pad 1922 to a robotic cleaner. The locations where cleaning fluid is applied to the wet cleaning pad 1922 allows more accurate monitoring of the cleaning fluid level inside the water tank, while a point far from the cleaning fluid application point may not reflect a decrease in humidity as quickly. Placing the air ingress point near attachment points connecting the wet cleaning pad 1922 to the robotic cleaner improves reliability of the humidity detection. The attachment points decrease the gap between the wet cleaning pad 1922 and the air ingress point, which insures the airflow is coming through the wet cleaning pad 1922.

Some embodiments include an active airflow along a sealed airpath. In such an embodiment, air moves unidirectionally from the wet cleaning pad 1922 to the humidity detector 1940 and then discharged into the chassis of the robot. Reduction in air leakage from the air path using gaskets or flexibles seals improves the results obtained from the humidity detector 1940. Moreover, an active airflow from the pad allows dynamic sensing of the wet cleaning pad 1922 condition during operation. The purposeful movement of air through a sealed airpath insures that the overall level of humidity reflects the humidity level at the air inlet.

In some embodiments , a cleaning pad plate 1922 can be situated above the cleaning pad 1921. The sensor assembly 1900 further includes an air pathway between the humidity detector 1940 and the wet cleaning pad 122. This air pathway includes an opening 1941 directed towards the cleaning pad plate 1922 and a vent 1943 connected to an interior space of a wet cleaning module. The cleaning pad plate 1922 may include an opening 1923 directed towards the cleaning pad 1921. Air may pass through the cleaning pad plate towards the sensor assembly 1900.

In some embodiments, a portion of a cleaning fluid tank 1915 is situated above the cleaning pad plate 1922. The sensor assembly 1900 further includes an air pathway between the humidity detector 1940 and the wet cleaning pad 122. This air pathway includes an opening 1941 directed towards the cleaning fluid tank 1915 and a vent 1925 connected to an interior space of a wet cleaning module. The passage through the cleaning fluid tank 1915 is isolated from the cleaning fluid and may be a physical tube that is part of the physical structure of the cleaning fluid tank. That is, a channel or passage may be built into the cleaning fluid tank such that the channel mates with a corresponding passage that allows air passage through the exterior chassis of the robotic cleaner to the humidity detector 1940. The cleaning fluid tank 1915, and more specifically the air path or channel, may include an opening 1923 directed towards the cleaning pad plate 1922. Air passes through the cleaning pad plate and the cleaning fluid tank towards the sensor assembly 1900.

In order to prevent air leakage into or out of the system, at least one gasket or seal may be included between the bottom of the robot chassis 1914 and other components connected to the sensor assembly 1900. A soft gasket or seal fixed to the cleaning fluid tank 1914 at the interface 1944 between the cleaning fluid tank 1914 and the bottom of the robot chassis 1914 prevents air from escaping the air pathway directed towards the sensor assembly 1900. A soft gasket or seal may be fixed to either the cleaning fluid tank 1914 or the cleaning pad plate 1922 at the interface 1929 between the two components.

Air may egress from the vent 1943 and into the chassis of the robotic cleaner. In some embodiments the vent 1943 is in fluid connection with the suction motor. In such embodiments, suction generated by the suction motor helps direct air from the wet cleaning pad 1922 and through the sensor assembly 1900 to create an active airflow.

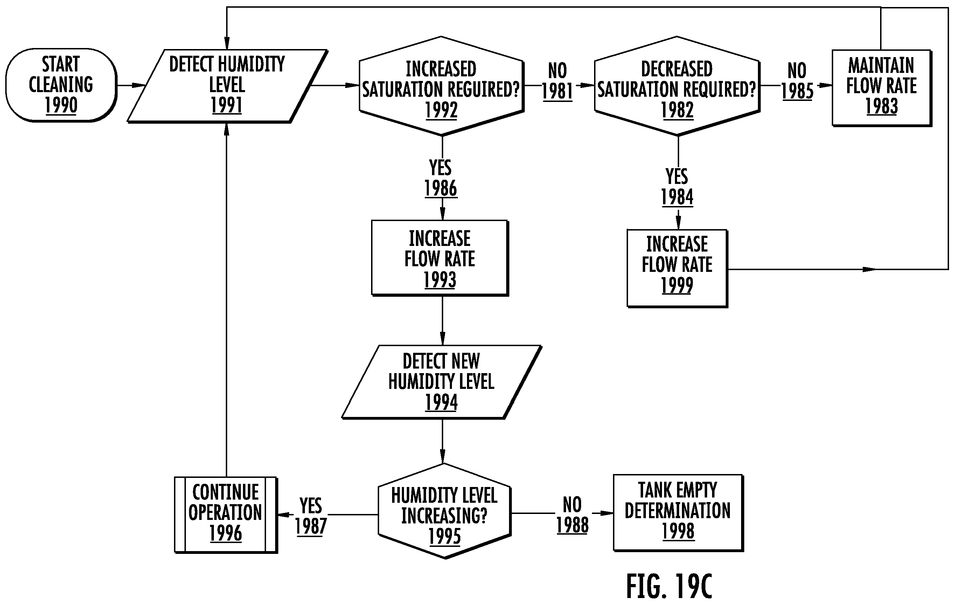

The humidity sensor 1940 may be further configured to provide information to a controller regarding cleaning liquid availability in a cleaning liquid tank. FIG. 19C is a flowchart illustrating one example method consistent with the present disclosure whereby the humidity detector 1940 may determine whether cleaning liquid is being pumped from the cleaning liquid tank onto a cleaning pad. In the illustrated example method, a robotic cleaner starts a cleaning operation 1990 that includes a wet cleaning mode. During the cleaning process, the humidity detector is used to determine an initial humidity level 1991. The humidity sensor transmits this information to the controller, which determines the saturation of the cleaning pad based on the detected initial humidity level. Different levels of cleaning pad saturation may be desirable for different cleaning modes. Based on the initial humidity level 1991 and the desired saturation, the controller determines if an increased saturation of the cleaning pad is required 1992. If increased saturation of the cleaning pad is not required 1981, then the controller determines if a decreased saturation of the cleaning pad is required 1982. If decreased saturation of the cleaning pad is not required 1985, then the controller does not alter the flow rate 1983 of the cleaning fluid onto the cleaning pad. If a decreased saturation of the cleaning pad is required 1984, the controller instructs a cleaning fluid pump assembly to decrease the flow rate of the cleaning liquid 1999 onto the cleaning pad.

If additional saturation is required 1986, then the controller instructs the cleaning fluid pump assembly to increase the flow rate of the cleaning liquid 1993 onto the cleaning pad. When flow rate is increased 1993, humidity should increase, indicating increased saturation of the cleaning pad. The humidity sensor detects a new humidity level 1994 following the instruction to increase the flow rate of the cleaning liquid 1993. If the humidity level has increased 1987 following the instruction, then the wet cleaning operation continues 1996. If the humidity level has not increased 1988 following the instruction, then the controller may determine that the cleaning fluid tank is empty 1998 or otherwise obstructed.

In some embodiments, the determination that the cleaning fluid tank is empty 1998 may occur after a series of humidity level determinations. That is, a single instance of humidity level not increasing 1988 following an instruction to increase flow rate 1993 may be insufficient for the controller to determine the condition of the cleaning fluid tank. A determination that humidity level is decreasing over multiple measurements may allow the controller to make the determination regarding cleaning fluid being pumped from the cleaning fluid tank and respond to that determination. The controller may alter the robotic cleaner behavior based on the determination that the cleaning fluid tank is empty 1998. In some embodiments, the robotic cleaner may maintain agitation of a cleaning pad even in the absence of cleaning fluid being pumped. In other embodiments, the robotic cleaner may enter an error state. In the error state, the robotic cleaner may stop moving, produce an audible or visual error alert, inform a mobile application, and/or otherwise communicate the error state to a user. Alternatively, the robotic cleaner may continue in a dry cleaning mode.

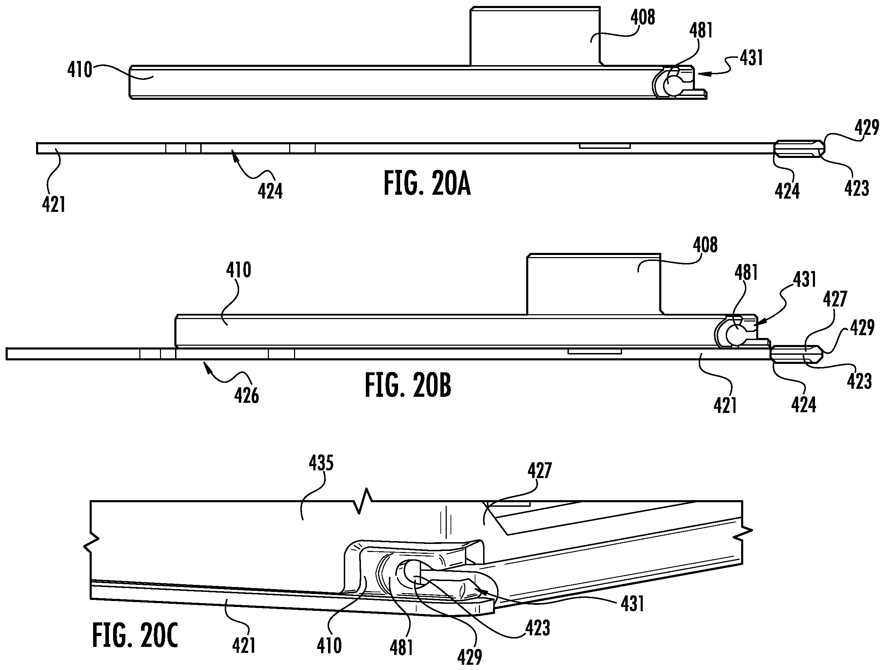

In some embodiments, the attachment of a cleaning pad to the wet cleaning module allows for a replaceable cleaning surface or pad. Particularly during wet-cleaning or moping, a cleaning pad can become impregnated with dirt. A user may want to limit the contact they have with the cleaning pad following its use during a cleaning operation. Various attachment mechanisms are consistent with the present disclosure. FIGS. 20A-24D are non-limiting examples of attachment mechanisms consistent with embodiments of the present disclosure.

An attachment mechanism for a leading edge of a cleaning pad, that is the edge that is attached closer to the front of the robotic cleaner, may be a different attachment mechanism than one used for a trailing edge of the cleaning pad. As seen in Chart 1, different permutations of attachment mechanisms may be used to secure the cleaning pad to the wet cleaning module.

### CHART 1

| | **FIGS.** | **Leading Edge Attachment Mechanism** | **Trailing Edge Attachment Mechanism** |
|---|---|---|---|
| 1 | 20A-20C | Slider | Elastic cord |
| 2 | 21A | Full length cloth pocket | Tab with snaps |
| 3 | 21B-21C | Silicone corner pockets | Tab + rigid mating piece |
| 4 | 22A-22B | Grommets on pad + posts on pad holder | Tab with magnet snaps |
| 5 | 23A-23B | Hooked rigid leading edge | Tab with Velcro |
| 6 | 24A-24D | Snaps | Elastic pocket |

FIGS. 20A-20C illustrate a mechanism for attaching the cleaning pad 421 to a wet cleaning module. Specifically, the cleaning pad 421 includes a rigid slider 423 on a leading edge 424 thereof. The rigid slider 423 may be formed of the same, or different, material as the cleaning pad 421 and may be formed integrally with the cleaning pad 421 or separately and coupled thereto.

In the illustrated example, the rigid slider 423 includes a body portion 427 and a rounded head portion 429. The body portion may be coupled to the leading edge 424 of the cleaning pad 421, e.g. with the leading edge 424 abutting the rounded head portion 429. The forward edge 431 of the tank base 410 includes a channel 481 shaped to receive the rounded head portion 429 of the rigid slider 423. In embodiments where the cleaning pad 421 is attached to the tank base 410 through a cleaning pad plate, the channel for receiving the rigid slider 423 may be provided in the cleaning pad plate, e.g. in the forward edge of the cleaning pad plate.

As shown in FIG. 20C, the cleaning pad 421 and rigid slider 423 are bent around the forward edge 431 of the tank base 410 and the rounded head portion 429 is inserted into the correspondingly shaped channel 481 formed in the forward edge 431 of the tank base 410 . The channel 481 is open on one side and closed on the other, such that the rigid slider 423 may only be inserted from a specific side. An elastic cord (not shown), or other attachment such as a hook-and-loop fastener, may be used to attach a trailing edge of the cleaning pad 421 to the wet cleaning module 435.

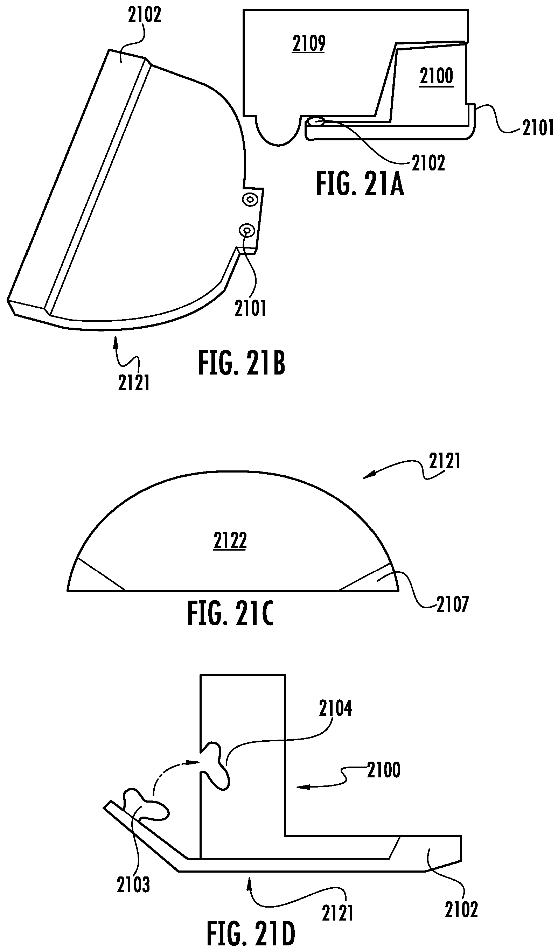

FIGS. 21A-21D illustrate additional mechanisms for attaching the cleaning pad 2121 to a wet cleaning module 2100. In FIG. 21A-B, the cleaning pad 2121 is constructed to include a trailing edge including a tab with one or more snaps 2101 that mate to one or more snaps on the rear of the wet cleaning module 2100 when the wet cleaning module 2100 is fixed to a robotic cleaning device 2109. The cleaning pad 2121 may further include a cloth pocket 2102 that allows a user to slide the cleaning pad 2121 onto a wet cleaning module 2100.

In an alternative configuration shown in FIG. 21C, the leading edge of the cleaning pad 2121 has two or more pockets 2107. The two or more pockets 2107 may be made of an elastic material that allows a user to stretch the cleaning pad 2121 onto a wet cleaning module 2100 such that the elastic material secures the cleaning pad 2121 in place.

FIG. 21D illustrates an attachment mechanism for the trailing edge of the cleaning pad 2121. The trailing edge of the cleaning pad 2121 is constructed to include a tab configured with a rigid block 2103. The rigid block 2103 mates onto a corresponding feature 2104 on the rear of the wet cleaning module 2100.

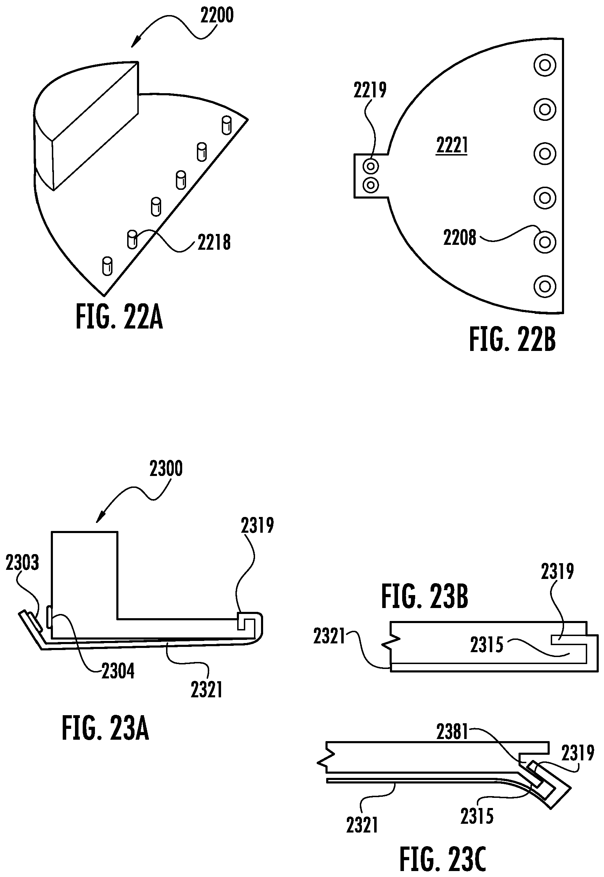

FIGS. 22A-22B show an attachment mechanism for attaching a cleaning pad 2221 to a wet cleaning module 2200. A leading edge of the cleaning pad 2221 includes one or more grommets 2208. The one or more grommets 2208 mate onto a corresponding one or more posts 2218 that are located on the wet cleaning module 2200. A trailing edge of the cleaning pad 2221 includes a tab with one or more magnetic snaps 2219 that mate onto a rear surface of the wet cleaning module 2200.

FIGS. 23A-23C show an attachment mechanism for attaching a cleaning pad 2321 to a wet cleaning module 2300. A leading edge of the cleaning pad 2321 is constructed to have a rigid bar 2319. The rigid bar 2319 hooks into a channel 2381 along the front of the wet cleaning module 2300. The channel 2381 may be formed using a deformable lip 2315 that allows a user to release the cleaning pad 2321 from its attachment to the wet cleaning module 2300. A trailing edge of the cleaning pad 2321 is constructed to include a tab with a hook-and-loop fastener 2303. The hook-and-loop fastener mates onto a corresponding fastener 2304 on the rear of the wet cleaning module 2300.

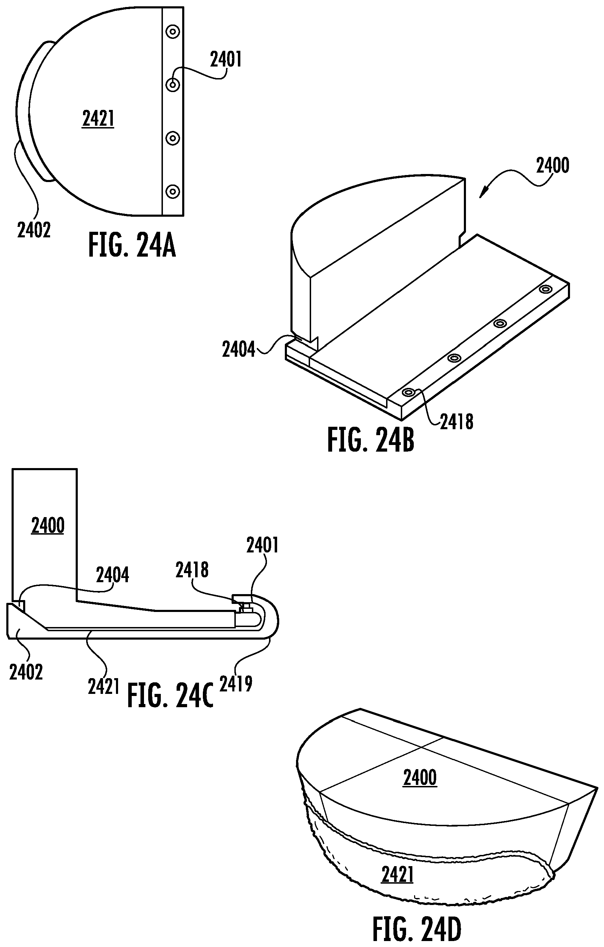

FIGS. 24A-24D show an attachment mechanism for attaching a cleaning pad 2421 to a wet cleaning module 2400. A leading edge of the cleaning pad 2421 includes one or more snaps 2401. The one or more snaps 2401 mate onto a corresponding one or more snaps 2418 that are located on the wet cleaning module 2400. A trailing edge of the cleaning pad 2421 is constructed to include an elastic pocket 2402 that attaches to a notch 2404 on the rear of the wet cleaning module 2400. As seen in FIG. 24D, the elastic pocket can produce a smooth attachment of the cleaning pad 2421 to the wet cleaning module 2400.

Further attachment mechanisms may include, but are not limited to, using a wet cleaning module that has a clamshell/bear trap frame which closes onto a leading edge of a cleaning pad and uses at least one clip or other mechanism to attach the trailing edge to the wet cleaning module; a wet cleaning module that has a hinge in the center, allowing a cleaning pad to be stretched across its surface; a wet cleaning module that includes a pad holder that swings open, allowing a cleaning pad to be slid onto an open "door" that is then closed; and a wet cleaning module that includes retractable hook and loop fasteners or teeth that attach to a cleaning pad and then retract using a button such that a user does not need to touch the cleaning pad for it to be released. The various attachment mechanisms shown in FIGS. 20A-24D and described above may be used in different permutations or combinations and are not limited to the specific combinations described herein.

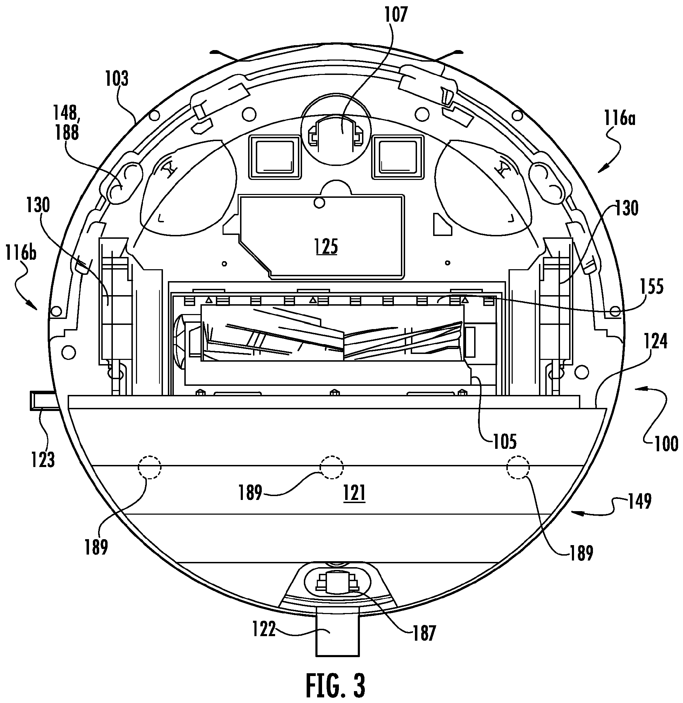

As described above, and referring particularly to FIGS. 1B and 3, the robotic cleaner 100 includes a plurality of wheels 130 coupled to a respective drive motor contained within a driven wheel assembly 141. When traveling over dry surfaces, a robotic cleaner encounters a variety of different surfaces such as, but not limited to, carpet, tile, hard wood, and linoleum. Wheels attached to the wheel assembly 141 should provide sufficient traction on the various surfaces. In particular, travel over a carpeted surface may induce greater wheel slippage than travel over a hard surface.

Including a wet cleaning module adds an additional degree of difficulty. A robotic cleaner should still perform on a dry surfaces, but should also perform on a wet surface while dragging a cleaning pad. The cleaning pad increases the friction that the wheels must overcome; the degree of additional friction may vary depending on the amount of cleaning fluid saturating the cleaning pad and how the cleaning pad is being agitated during a cleaning operation. Moreover, the materials used for the wheels and/or tires should be compatible with the cleaning fluid used during a wet cleaning operation, that is, the cleaning fluid should not degrade or otherwise harm the wheels.

Wheels used by the robotic cleaner may be formed of a variety of different materials. Softer materials may increase the gripping power of the wheels on hard surfaces, but decrease performance on carpets. Softer materials wear away more quickly as well. Treads pressed into wheels help provide additional grip such that a more durable material may be used.

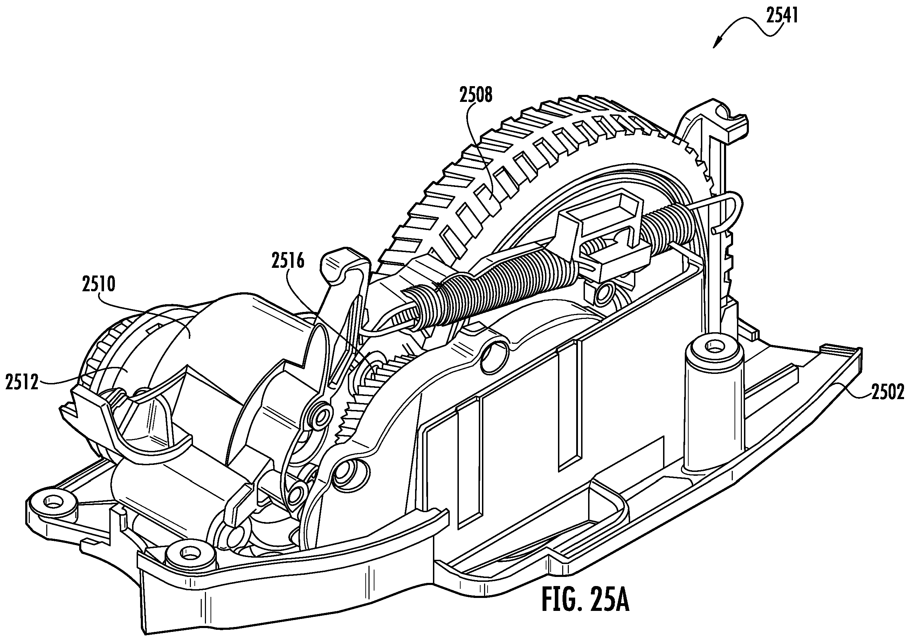

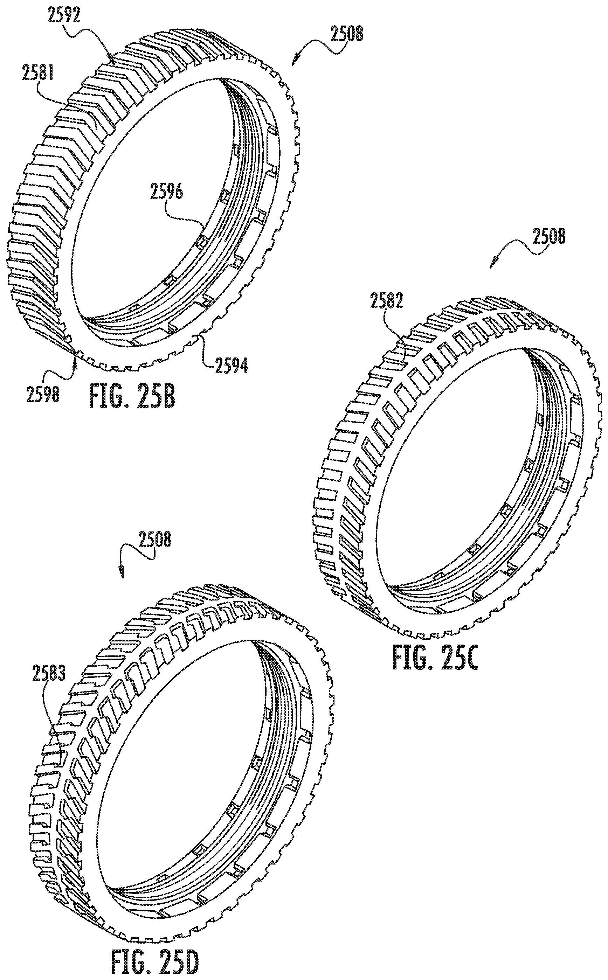

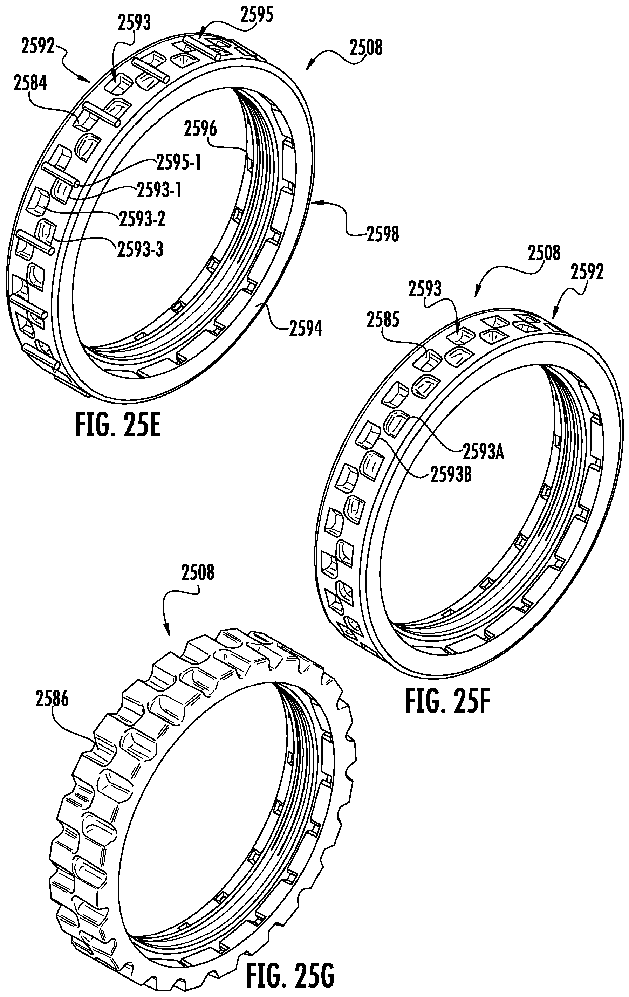

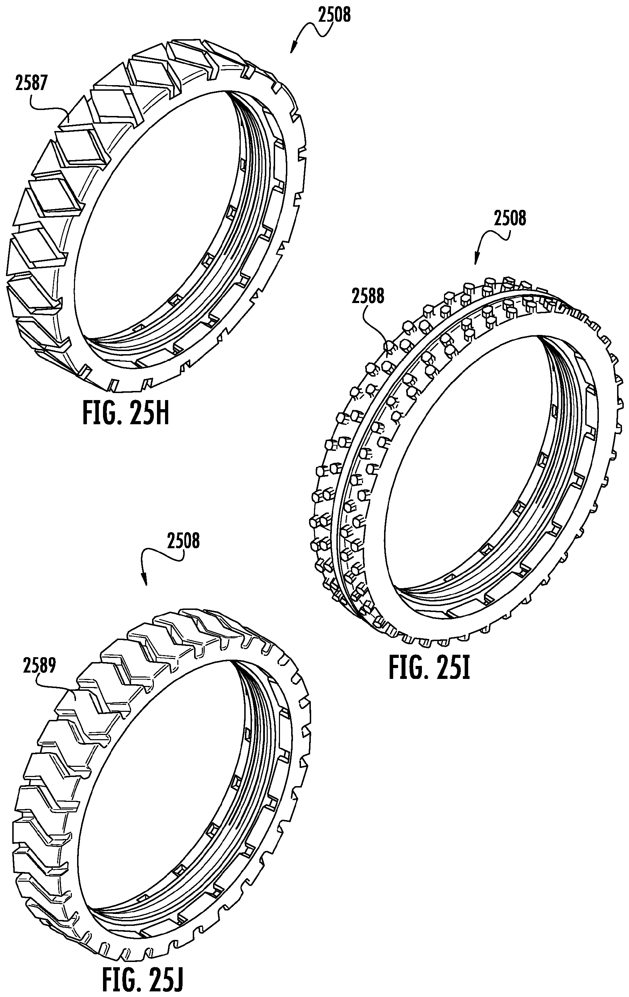

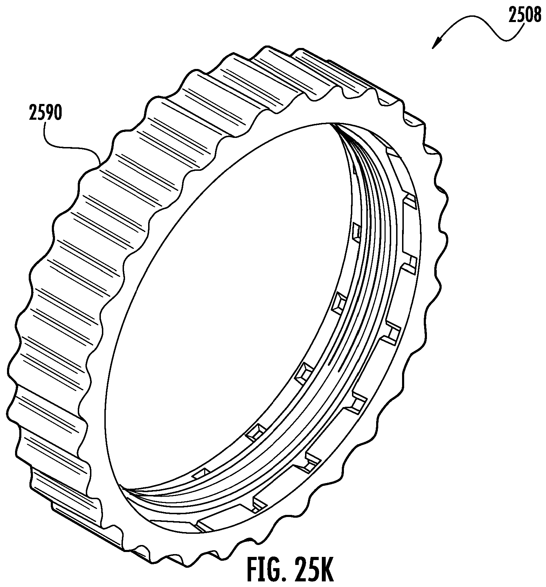

FIG. 25A shows an isometric view of one example of a wheel assembly 2541, which may be an example of the wheel assembly 141 of FIG. 1B. As shown, the wheel assembly 2541 includes a frame 2502. The frame 2502 has a driven wheel 2508 an arm 2510 coupled thereto. A drive motor 2512 is coupled to the arm 2510. The wheel assembly 2541 includes one or more gears 2516 configured to transmit power to the driven wheel 2508.

FIGS. 25B-25K illustrate driven wheels 2508 formed with treads 2581, 2582, 2583, 2584, 2585, 2586, 2587, 2588, 2589, 2590. The wheel treads 2581, 2582, 2583, 2584, 2585, 2586, 2587, 2588, 2589, 2590 are formed in a tread surface 2592 of the wheel, i.e. the surface that contacts the surface over which the robotic cleaner travels. The tread surface is provided between first 2594 and second sidewalls 2596. A perimeter edge 2598 of the wheels defines a transition between the sidewalls 2594, 2596 and the tread surface 2592 and the sidewalls extend radially inward from the perimeter edge. 2598. Wheels formed from sponge rubber with a density of 40 lbs/ft3 provides traction when a tread pattern is pressed into the material during molding. The tread pattern may include a chevron tread pattern 2581, a segmented chevron tread pattern 2582, a modified chevron tread pattern 2583, gapless edge designs 2584 2585, a checkerboard tread pattern 2586, a cut diamond tread pattern 2587, a stippled tread pattern 2588, a Z-indent tread pattern 2589, or a wave tread pattern 2590. The depth and shape of the treads formed into the wheel surface allows for improved traction on wet floors while still allowing the robotic cleaner to move across carpet or other household flooring materials. In particular, the various chevron-based tread patterns allow the robotic cleaner to operate while using a cleaning pad that increases drag on the robotic cleaner. The tread patterns 2581, 2582, 2583, 2584, 2585, 2586, 2587, 2588, 2589, 2590 shown in FIGS. 25B-25K provide gripping surfaces for the robotic cleaner during operation. Further, the indentations described disperse water and debris from beneath the wheel, allowing the traction under wet cleaning conditions.

A robotic cleaner having wheel treads that form gaps in the side wall, e.g. gap 2599 in FIG. 25B, driving over a cord (the cord may be, but is not limited to, an audio cable, a power cord, run tassels, drapery pulls, etc.) may catch the cord in the gaps 2599 and carry the cord in a wheel tread such that the cord wraps around the axle. This wheel wrap may prevent the robotic cleaner from operating if the cord entangles a drive wheel sufficiently.

Referring to FIGS. 25E and 25F, the gapless edge treads 2584, 2585 may prevent debris from being caught in the wheel tread. In the illustrated embodiments, the gapless tread designs do not include wheel tread features that intersect the perimeter edge 2598 or the sidewalls 2594, 2596 of the wheel to form a gap that could catch a cord. Instead, the illustrated embodiments include divots 2593, 2595 and/or raised surfaces in the wheel tread surface 2592 that do not intersect the perimeter edge 2598 and leave a perimeter sidewall edge 2598 in the shape of circle. Since there is no gap in the edge 2598 or the sidewalls 2594, 2596, in which a cord may be lodged during movement, the cord will not be carried up into the chassis. However, the divots 2593 and/or raised surfaces 2595 in the wheel still allow traction for operation in both wet and dry environments.

A variety of gapless edge designs are possible. In the examples shown in FIGS. 25E and 25F, the treads 2584 and 2585 each comprises a repeating pattern extending along the circumference of the wheel. In FIG. 25E, the repeating pattern includes a raised surface 2595-1 extending transversely (in the direction from one side wall to the other) across the tread surface 2592 followed by a plurality of divots 2593-1, 2593-2, 2593-3. Any number of divots 2593 and raised surfaces 2595 may be provided in the repeating pattern. In the illustrated embodiment, the divots 2593-1, 2593-2, 2593-3 are each transversely off set from the divot adjacent thereto across the tread surface 2592. In FIG. 25F, the repeating pattern includes a first divot 2593A followed by a second divot 2593B transversely offset from the first divot 2593B across the tread surface.

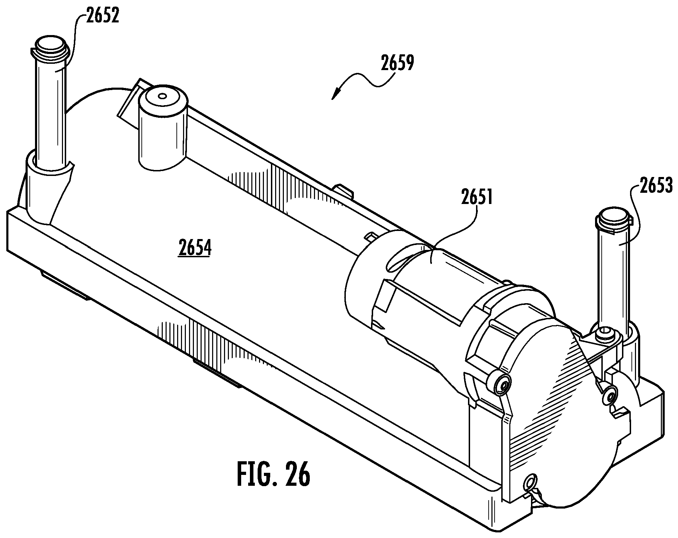

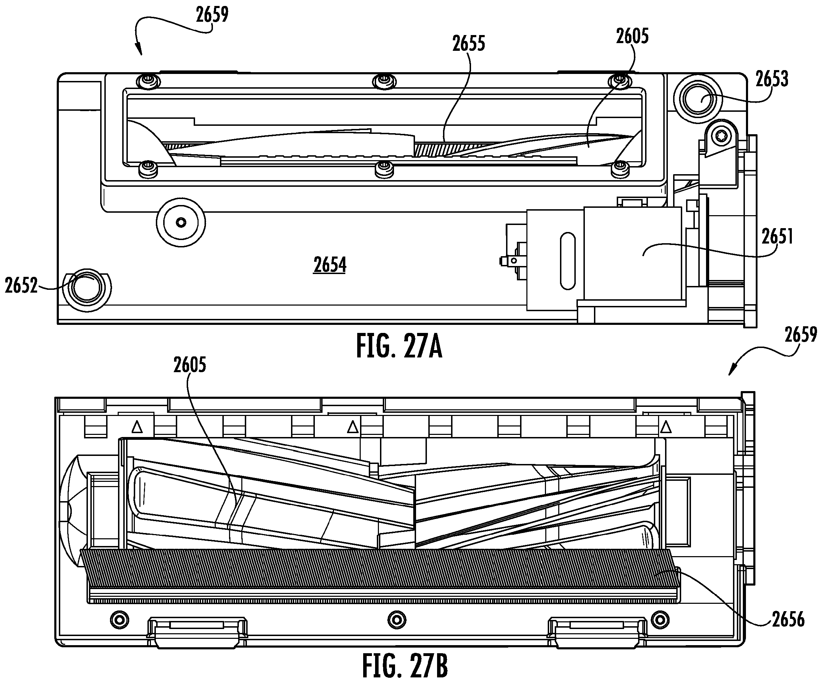

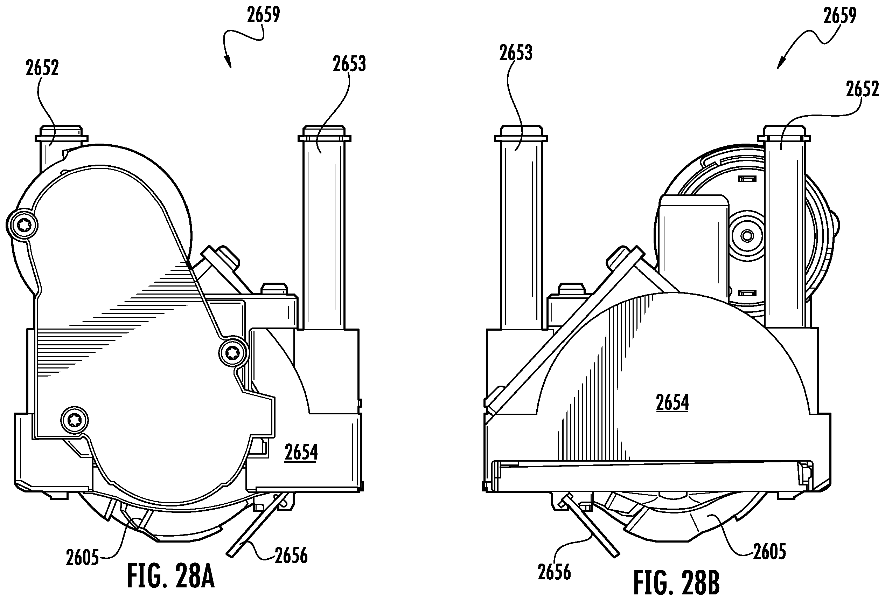

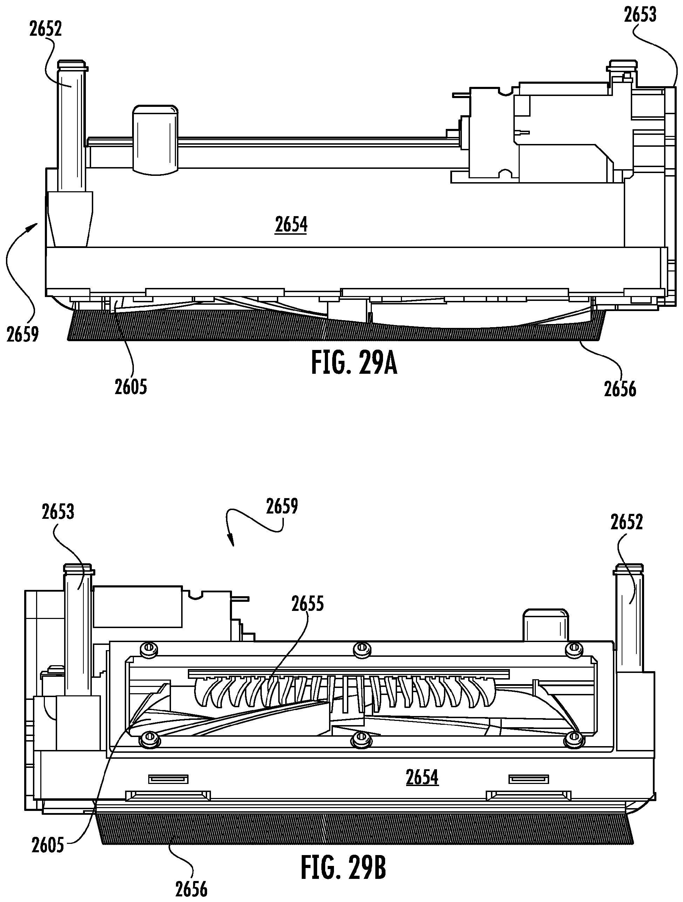

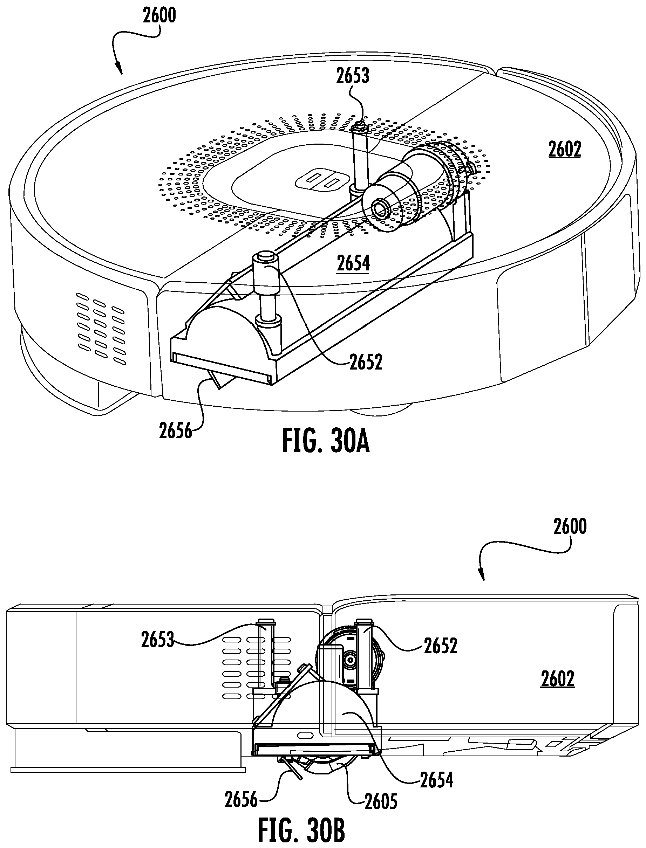

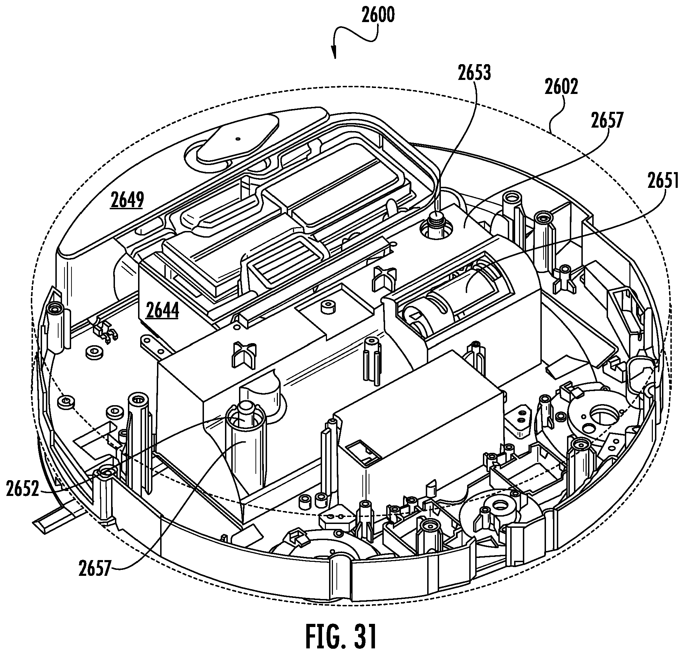

In some embodiments of the wheels used in the robotic cleaner, the materials used to form the wheels and the treads include neoprene and chloroprene, and other closed cell rubber sponge materials. Wheels made of polyvinyl chloride (PVC), Thermoplastic vulcanizates (TPV), Thermoplastic polyurethane (TPU), Natural Rubber, Nitrile Butadiene Rubber (NBR), Styrene Butadiene Rubber (SBR), Ethylene Propylene Diene Terpolymer (EPDM), and acrylonitrile-butadiene (ABS) (with or without other extractables, hydrocarbons, carbon black, and ash) may also be used. The hardness of the wheels may vary from 50-70 durometer, depending on the tread design and material used. Referring now to FIGS. 26-31, a robotic cleaner includes a brush roll assembly 2659 carried by a robotic cleaner 2600 within a chassis 2602 of the robotic cleaner 2600. In the illustrated embodiment, the brush roll assembly 2659 includes a housing 2654, a motor 2651, a main brush roll 2605, a front sole plate pin 2652, a rear sole plate pin 2653, a debrider comb 2655, and a rear bristle strip 2656.

In the illustrated embodiment, the brush roll assembly 2659 operates as a floating sole plate. The brush roll assembly 2659 forms a suction conduit fluidly coupled to a dust cup 2644 and a suction motor. The suction motor causes debris to be suctioned into the suction conduit and deposited into the dust cup 2644 for later disposal. The weight of the brush roll assembly 2659 generates a downward force and has a lowest point while suspended in the air. The surface on which the robotic cleaner 2600 travels may displace the brush roll assembly 2659 from its lowest point such that the brush roll assembly 2659 move upwards into the robotic cleaner chassis 2602. Carpet, hard wood, tile, rugs, and other flooring types have different features that determine the displacement of the brush roll assembly 2659. The distance between the brush roll assembly 2659 and the surface being cleaned determines the strength of suction provided by the robotic cleaner 2600 and the interactions between the main brush roll 2605 and the surface being cleaned. Additional engagement between the main brush roll 2605 and the surface being cleaned may increase agitation of the surface and allow additional dry debris to be suctioned into the dust cup 2644.

The brush roll assembly 2659 adjusts the vertical position of the main brush roll 2605 relative to the upper portion of the robotic cleaner chassis 2602 to accommodate different floor surfaces. The sole plate pins 2652, 2653 are retained using one or more shrouds 2657 that may be formed from one or more pieces and fixed to the robotic cleaner chassis 2602. The brush roll assembly 2659 maintains a lower planar surface that is generally parallel to a surface on which the robotic cleaner 2600 is moving. During the movement of the robotic cleaner 2600, the brush roll assembly 2659 moves up and down along the two or more pins 2652 2653. The brush roll assembly 2659 translates vertically along the front sole plate pin 2652 and the rear sole plate pin 2653. The displacement of the brush roll assembly 2659 ranges from 9 to 11 mm on the vertical axis. The total displacement of the brush roll assembly 2659 allows the robotic cleaner 2600 to operate effectively on multiple types of surfaces.

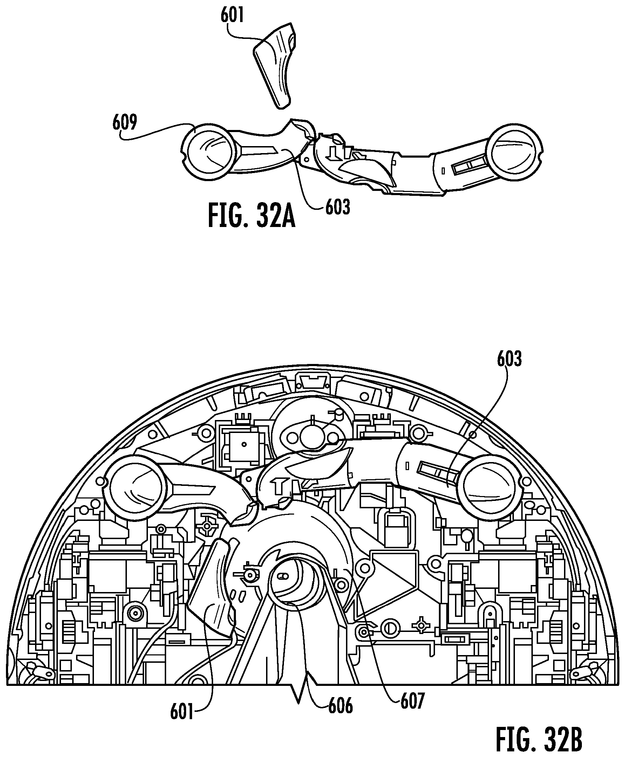

As shown in FIGS. 32A-32B, in some embodiments exhaust from a suction motor 607 may be ducted via at least one internal conduit 603 to an air outlet 609. The suction motor 607 is fluidly coupled to an air inlet 606 in the robotic cleaner. In the absence of internal ducting 603, air may be exhausted through an exhaust port (not shown) on the robotic cleaner. An exhaust outlet plug 601 may be used to redirect the flow of air from the exhaust port and through the internal conduit 603 and to the air outlet 609. The positive air flow generated by the suction motor 607 is directed through the air outlet 609. One or more filters or filtration members, for example a HEPA filter, can be configured such that exhaust from the suction motor 607 passes through the one or more filters prior to the one or more air outlet 609. In some embodiments, the air outlet 609 is configured to exhaust air from the suction motor 607 such that the air does not agitate debris on the surface being cleaned. In some embodiments, the robotic cleaner includes at least one air outlet 609 that directs air above the robotic cleaner chassis. In some embodiments, the air outlet 609 is configured to exhaust air from the suction motor 607 such that the air moving through the air outlet 609 dries cleaning fluid deposited by the robotic cleaner during a wet cleaning mode.

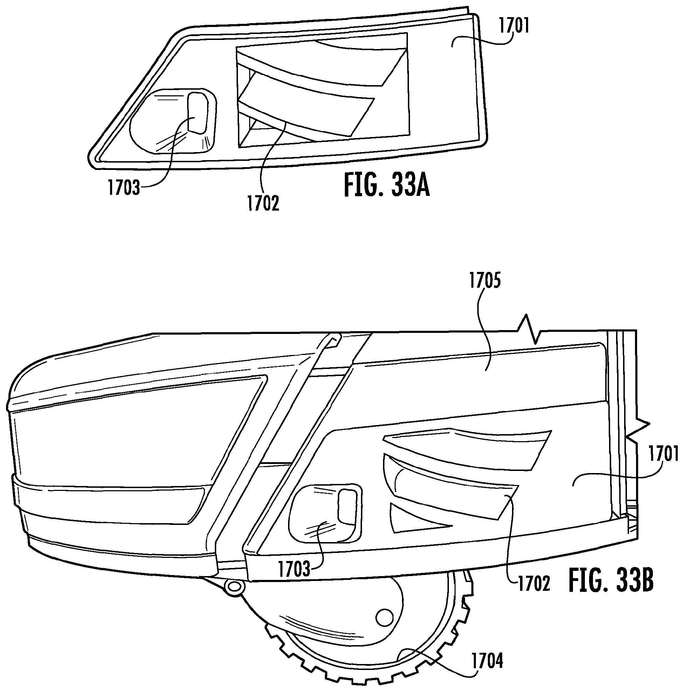

The air outlet 609 may be configured to couple with one or more air jet assemblies, wherein the one or more air jet assemblies are constructed to urge debris to a location under the robotic cleaning apparatus. The air outlet 609 may be configured to couple with one or more air jet assemblies, wherein the one or more air jet assemblies are constructed to direct air above the robotic cleaner chassis. The one or more air jet assemblies may include one or more nozzles to direct air jets, wherein the one or more nozzles are a component of the one or more air jet assemblies. FIGS. 33A-33B illustrate an example embodiment of a vent that may be used as a component of air jet assemblies. An air jet assembly may be attached to a robotic cleaner such that the air jet assembly is attached to a portion of the robotic cleaner chassis 1705 that is perpendicular to the surface to be cleaned. Exhaust from a suction motor is ducted via at least one internal conduit to the air jet assembly. The air jet assembly may include the vent 1701 that directs air flow from the robot. Air exits the vent 1701 from one or more louvre vent jets 1702, and/or from a secondary vent jet 1703. The placement of the air jet assembly on the robotic cleaner chassis 1705 may be determined by the relative position of one or more wheels 1704 of the robotic cleaner. Placement of the air jet assembly such that air jet moves air in front of the path of the robotic cleaner may diminish debris ingress into the wheel assemblies.

A robotic cleaner and methods consistent with the present invention includes a variety of aspects that may be provided in a variety of combinations. According to another aspect of the disclosure there is provided robotic cleaner including: a chassis; a plurality of drive wheels coupled to the chassis; a controller for autonomously controlling the drive wheels to maneuver the robotic cleaner over a cleaning surface; and a wet cleaning module coupled to the chassis. The wet cleaning module includes a cleaning pad having a rigid slider at a leading edge of the cleaning pad, the rigid slider being slidably disposed in a corresponding channel of the wet cleaning module to removably couple the leading edge of the cleaning pad to the wet cleaning module.

According to another aspect of the invention there is provided a cleaning pad for a robotic cleaner including a rigid slider at a leading edge of the cleaning pad. The rigid slider is configured to be slidably disposed in a corresponding channel of the wet cleaning module to removably couple the leading edge of the cleaning pad to the wet cleaning module. A portion of the rigid slider may be positioned on the cleaning pad to extend outwardly beyond an end surface of the leading edge.

Embodiments of the methods described herein may be implemented using a controller, processor and/or other programmable device. To that end, the methods described herein may be implemented on a tangible, non-transitory computer readable medium having instructions stored thereon that when executed by one or more processors perform the methods. Thus, for example, a controller may include a storage medium to store instructions (in, for example, firmware or software) to perform the operations described herein. The storage medium may include any type of tangible medium, for example, any type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic and static RAMs, erasable programmable read-only memories (EPROMs), electrically erasable programmable read-only memories (EEPROMs), flash memories, magnetic or optical cards, or any type of media suitable for storing electronic instructions.

It will be appreciated by those skilled in the art that any block diagrams herein represent conceptual views embodying the principles of the invention. Similarly, it will be appreciated that any block diagrams, flow charts, flow diagrams, state transition diagrams, pseudocode, and the like represent various processes which may be substantially represented in computer readable medium and so executed by a computer or processor, whether or not such computer or processor is explicitly shown. Software modules, or simply modules which are implied to be software, may be represented herein as any combination of flowchart elements or other elements indicating performance of process steps and/or textual description. Such modules may be executed by hardware that is expressly or implicitly shown.

Further, while the block flow diagrams and flowchart shown herein illustrate various operations, it is to be understood that the operations need not be executed in the illustrated order and not all of the operations depicted in the therein are necessary for other embodiments to function. Indeed, it is fully contemplated herein that in other embodiments, the operations and/or other operations described herein, may be combined in a manner not specifically shown in any of the drawings, but still fully consistent with the present disclosure. Thus, claims directed to features and/or operations that are not exactly shown in one drawing are deemed within the scope and content of the present disclosure.

The functions of the various elements shown in the figures, including any functional blocks described as "controller", may be provided through the use of dedicated hardware as well as hardware capable of executing software in association with appropriate software. The functions may be provided by a single dedicated processor, by a single shared processor, or by a plurality of individual processors, some of which may be shared. Moreover, explicit use of the term "controller" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included.

The term "coupled" as used herein refers to any connection, coupling, link or the like by which signals carried by one system element are imparted to the "coupled" element. Such "coupled" devices, or signals and devices, may be, but are not necessarily directly connected to one another and may be separated by intermediate components or devices that may manipulate or modify such signals. Likewise, the terms "connected" or "coupled" as used herein in regard to mechanical or physical connections or couplings is a relative term and may include, but does not require, a direct physical connection.

Elements, components, modules, and/or parts thereof that are described and/or otherwise portrayed through the figures to communicate with, be associated with, and/or be based on, something else, may be understood to so communicate, be associated with, and/or be based on in a direct and/or indirect manner, unless otherwise stipulated herein.

Unless otherwise stated, use of the word "substantially" or "approximately" or "about" may be construed to include a precise relationship, condition, arrangement, orientation, and/or other characteristic, and deviations thereof as understood by one of ordinary skill in the art, to the extent that such deviations do not materially affect the disclosed methods and systems. Throughout the entirety of the present disclosure, use of the articles "a" and/or "an" and/or "the" to modify a noun may be understood to be used for convenience and to include one, or more than one, of the modified noun, unless otherwise specifically stated. The terms "comprising", "including" and "having" are intended to be inclusive and mean that there may be additional elements other than the listed elements.

While the principles of various embodiments have been described herein, it is to be understood by those skilled in the art that this description is made only by way of example and not as a limitation as to the scope of the present invention. Other embodiments are contemplated within the scope of the present invention in addition to the exemplary embodiments shown and described herein. It will be appreciated by a person skilled in the art that a robotic cleaner consistent with the present invention may embody any one or more of the features contained herein and that the features may be used in any particular combination or sub-combination. Modifications and substitutions by one of ordinary skill in the art are considered to be within the scope of the present invention.

## Claims

1. A robotic cleaner (100; 220) comprising:
a chassis (102);
a plurality of drive wheels (130) coupled to the chassis (102);
a controller (139) for autonomously controlling the drive wheels (130) to maneuver the robotic cleaner (100; 220) over a cleaning surface; and
a wet cleaning module (149; 290; 1290) coupled to the chassis (102),
**characterized in**, the wet cleaning module (149; 1290) comprising:
a cleaning pad (121; 421) having a rigid slider (123; 423) at a leading edge (124; 424) of the cleaning pad (121; 421), the rigid slider (123; 423) being slidably disposed in a corresponding channel (481) of the wet cleaning module (149; 290; 1290) to removably couple the leading edge (124; 424) of the cleaning pad (121; 421) to the wet cleaning module (149; 290; 1290).

2. A robotic cleaner (100; 220) according to claim 1, wherein the wet cleaning module (149; 290; 1290) further comprises a tank (145; 293; 1293) for receiving a cleaning fluid, the tank (145; 293; 1293) extending upwardly from a tank base (120; 410; 292; 1292), and wherein the channel (481) is formed in a forward edge (431) of the tank base (120; 410; 292; 1292).

3. A robotic cleaner (100; 220) according to claim 2, and wherein the cleaning pad (121; 421) is bent around a portion of the forward edge (431) of the tank base (120; 410; 292; 1292) when the rigid slider (123; 423) is disposed in the channel (481).

4. A robotic cleaner (100; 220) according to claim 1, wherein a portion of the rigid slider (123; 423) extends outwardly from the channel (481) at a side (116) of the chassis (102) to allow a user to grip the rigid slider (123; 423) to remove the cleaning pad (121; 421) from the wet cleaning module (149; 290; 1290).

5. A robotic cleaner (100; 220) according to claim 4, wherein a portion of the rigid slider (123; 423) extends outwardly from the channel (481) at a side (116) of the chassis (102) by at least about 1cm.

6. A robotic cleaner (100; 220) according to claim 1, wherein the rigid slider (123; 423) extends along only a portion of the leading edge (124; 424) of the cleaning pad (121; 421).

7. A robotic cleaner (100; 220) according to claim 1, wherein the rigid slider (123; 423) has a flat portion (427) coupled to the leading edge (124; 424) of the cleaning pad (121; 421) and a head portion (429) at a forward portion of the rigid slider (123; 423), and wherein the leading edge of the cleaning pad (121; 421) abuts the head portion (429) of the rigid slider (123; 423).

8. A robotic cleaner (100; 220) according to claim 1, wherein each of the drive wheels (130) comprises associated first (2594) and second (2596) sidewalls with a tread surface (2592) disposed between the sidewalls (2594, 2596), each of the drive wheels (130) further comprising a perimeter edge (2598) defining a transition between the sidewalls (2594, 2596) and the tread surface (2592), each of the drive wheels (130) further comprising a tread pattern on the tread surface (2592) that does not intersect the perimeter edge (2598).

9. A robotic cleaner (100; 220) according to claim 1, the robotic cleaner (100; 220) further comprising a vacuum coupled to the chassis (102) and comprising a suction conduit (155) at the bottom of the chassis (120), wherein the drive wheels (130) are independently rotatable about associated rotational axes, and wherein the cleaning pad (121; 421) is coupled to the chassis (102) aft of the vacuum and aft of the rotational axes.

10. A robotic cleaner (100; 220) according to claim 1, wherein the wet cleaning module (149; 290; 1290) further comprises a liquid applicator configured to apply cleaning fluid onto the cleaning pad (121; 421), an agitation module configured to agitate the cleaning pad (121; 421), and a motor for driving both the liquid applicator and the agitation module.

11. A robotic cleaner (100; 220) according to claim 1, wherein the wet cleaning module (149; 290; 1290) further comprises a tank (145; 293; 1293) for receiving a cleaning fluid, the tank (145; 293; 1293) extending upwardly from a tank base (120; 410; 292; 1292), and wherein the cleaning pad (121; 421) is coupled to a bottom of the tank base (120; 410; 292; 1292).

12. A robotic cleaner (100; 220) according to claim 1, wherein the wet cleaning module (149; 290; 1290) further comprises an agitation module directly coupled to a forward portion of the cleaning pad (121; 421) and indirectly coupled to a rearward portion of the cleaning pad (121; 421), the agitation module being configured to impart agitation to the cleaning pad (121; 421).

13. A robotic cleaner (100; 220) according to claim 1, wherein the wet cleaning module (149; 290; 1290) further comprises:
a tank (145; 293; 1293) for holding a cleaning fluid, the tank (145; 293; 1293) being fixed in position relative to the chassis (102) when the wet cleaning module (149; 290; 1290) is coupled to the chassis (102);
a cleaning pad plate (210) movably coupled to the bottom of the tank (145; 293; 1293), wherein the corresponding channel (481) of the wet cleaning module (149; 290; 1290) is provided at a leading edge of cleaning pad plate (210); and
an agitation module coupled to the cleaning pad plate (210) and configured to generate linear motion to agitate the cleaning pad (121; 421).

14. A robotic cleaner (100; 220) according to claim 13, wherein the agitation module comprises at least one sideways cam driven by a rotational output of a motor, and wherein the cleaning pad plate (210) is configured to engage the sideways cam when the wet cleaning module (149; 290; 1290) is coupled to the chassis (102).

15. A cleaning pad (121; 421) for a robotic cleaner (100; 220) comprising:
a rigid slider (123; 423) at a leading edge (124; 424) of the cleaning pad (121; 421), the rigid slider (123; 423) being configured to be slidably disposed in a corresponding channel (481) of the wet cleaning module (149; 290; 1290) to removably couple the leading edge (124; 424) of the cleaning pad (121; 421) to the wet cleaning module (149; 290; 1290), wherein a portion of the rigid slider (123; 423) is positioned on the cleaning pad (121; 421) to extend outwardly beyond an end surface of the leading edge (124; 424).

## Patentansprüche

1. Robotischer Reiniger (100; 220), umfassend:
ein Fahrgestell (102);
eine Vielzahl von Antriebsrädern (130), die an das Fahrgestell (102) gekoppelt sind;
eine Steuerung (139) zum autonomen Steuern der Antriebsräder (130), um den robotischen Reiniger (100; 220) über eine Reinigungsfläche zu manövrieren; und
ein Nassreinigungsmodul (149; 290; 1290), das an das Fahrgestell (102) gekoppelt ist, **gekennzeichnet dadurch, dass** das Nassreinigungsmodul (149; 1290) Folgendes umfasst:
ein Reinigungspad (121; 421), das einen starren Gleiter (123; 423) an einer Vorderkante (124; 424) des Reinigungspads (121; 421) aufweist, wobei der starre Gleiter (123; 423) gleitbar in einem entsprechenden Kanal (481) des Nassreinigungsmoduls (149; 290; 1290) angeordnet ist, um die Vorderkante (124; 424) des Reinigungspads (121; 421) lösbar an das Nassreinigungsmodul (149; 290; 1290) zu koppeln.

2. Robotischer Reiniger (100; 220) nach Anspruch 1, wobei das Nassreinigungsmodul (149; 290; 1290) ferner einen Behälter (145; 293; 1293) zum Aufnehmen eines Reinigungsfluids umfasst, wobei sich der Behälter (145; 293; 1293) von einer Behälterbasis (120; 410; 292; 1292) nach oben erstreckt und wobei der Kanal (481) in einer vorderen Kante (431) der Behälterbasis (120; 410; 292; 1292) gebildet ist.

3. Robotischer Reiniger (100; 220) nach Anspruch 2 und wobei das Reinigungspad (121; 421) um einen Abschnitt der vorderen Kante (431) der Behälterbasis (120; 410; 292; 1292) gebogen ist, wenn der starre Gleiter (123; 423) in dem Kanal (481) angeordnet ist.

4. Robotischer Reiniger (100; 220) nach Anspruch 1 und wobei sich ein Abschnitt des starren Gleiters (123; 423) von dem Kanal (481) an einer Seite (116) des Fahrgestells (102) nach außen erstreckt, um es einem Benutzer zu ermöglichen, den starren Gleiter (123; 423) zu ergreifen, um das Reinigungspad (121; 421) von dem Nassreinigungsmodul (149; 290; 1290) zu entfernen.

5. Robotischer Reiniger (100; 220) nach Anspruch 4, wobei sich ein Abschnitt des starren Gleiters (123; 423) von dem Kanal (481) an der Seite (116) des Fahrgestells (102) um mindestens 1 cm nach außen erstreckt.

6. Robotischer Reiniger (100; 220) nach Anspruch 1, wobei sich der starre Gleiter (123; 423) nur entlang eines Abschnitts der Vorderkante (124; 424) des Reinigungspads (121; 421) erstreckt.

7. Robotischer Reiniger (100; 220) nach Anspruch 1, wobei der starre Gleiter (123; 423) einen flachen Abschnitt (427), der an die Vorderkante (124; 424) des Reinigungspads (121; 421) gekoppelt ist, und einen Kopfabschnitt (429) an einem vorderen Abschnitt des starren Gleiters (123; 423) aufweist und wobei die Vorderkante des Reinigungspads (121; 421) an dem Kopfabschnitt (429) des starren Gleiters (123; 423) angrenzt.

8. Robotischer Reiniger (100; 220) nach Anspruch 1, wobei jedes der Antriebsräder (130) zugeordnete erste (2594) und zweite (2596) Seitenwände umfasst, wobei eine Lauffläche (2592) zwischen den Seitenwänden (2594, 2596) angeordnet ist, wobei jedes der Antriebsräder (130) ferner eine Umfangskante (2598) umfasst, die einen Übergang zwischen den Seitenwänden (2594, 2596) und der Lauffläche (2592) definiert, wobei jedes der Antriebsräder (130) ferner ein Laufprofil auf der Lauffläche (2592) umfasst, das sich nicht mit der Umfangskante (2598) schneidet.

9. Robotischer Reiniger (100; 220) nach Anspruch 1, wobei der robotische Reiniger (100; 220) ferner ein Vakuum umfasst, das an das Fahrgestell (102) gekoppelt ist, und eine Saugleitung (155) an dem Boden des Fahrgestells (120) umfasst, wobei die Antriebsräder (130) unabhängig um zugeordnete Drehachsen drehbar sind und wobei das Reinigungspad (121; 421) hinter dem Vakuum und hinter den Drehachsen an das Fahrgestell (102) gekoppelt ist.

10. Robotischer Reiniger (100; 220) nach Anspruch 1, wobei das Nassreinigungsmodul (149; 290; 1290) ferner eine Flüssigkeitsauftragsvorrichtung, die dazu konfiguriert ist, ein Reinigungsfluid auf das Reinigungspad (121; 421) aufzutragen, ein Bewegungsmodul, das dazu konfiguriert ist, das Reinigungspad (121; 421) zu bewegen, und einen Motor zum Antreiben sowohl der Flüssigkeitsauftragungsvorrichtung als auch des Bewegungsmoduls umfasst.

11. Robotischer Reiniger (100; 220) nach Anspruch 1, wobei das Nassreinigungsmodul (149; 290; 1290) ferner einen Behälter (145; 293; 1293) zum Aufnehmen eines Reinigungsfluids umfasst, wobei sich der Behälter (145; 293; 1293) von einer Behälterbasis (120; 410; 292; 1292) nach oben erstreckt und wobei das Reinigungspad (121; 421) an einen Boden der Behälterbasis (120; 410; 292; 1292) gekoppelt ist.

12. Robotischer Reiniger (100; 220) nach Anspruch 1, wobei das Nassreinigungsmodul (149; 290; 1290) ferner ein Bewegungsmodul umfasst, das direkt an einen vorderen Abschnitt des Reinigungspads (121; 421) gekoppelt ist und indirekt an einen hinteren Abschnitt des Reinigungspads (121; 421) gekoppelt ist, wobei das Bewegungsmodul dazu konfiguriert ist, eine Bewegung an das Reinigungspad (121; 421) weiterzugeben.

13. Robotischer Reiniger (100; 220) nach Anspruch 1, wobei das Nassreinigungsmodul (149; 290; 1290) ferner Folgendes umfasst:
einen Behälter (145; 293; 1293) zum Halten eines Reinigungsfluids, wobei der Behälter (145; 293; 1293) an Ort und Stelle relativ zu dem Fahrgestell (102) fixiert ist, wenn das Nassreinigungsmodul (149; 290; 1290) an das Fahrgestell (102) gekoppelt ist;
eine Reinigungspadplatte (210), die bewegbar an den Boden des Behälters (145; 293; 1293) gekoppelt ist, wobei der entsprechende Kanal (481) des Nassreinigungsmoduls (149; 290; 1290) an einer Vorderkante der Reinigungspadplatte (210) bereitgestellt ist; und
ein Bewegungsmodul, das an die Reinigungspadplatte (210) gekoppelt und dazu konfiguriert ist, eine lineare Bewegung zum Bewegen des Reinigungspads (121; 421) zu generieren.

14. Robotischer Reiniger (100; 220) nach Anspruch 13, wobei das Bewegungsmodul mindestens einen seitwärtigen Nocken umfasst, der durch einen Drehausgang eines Motors angetrieben wird, und wobei die Reinigungspadplatte (210) dazu konfiguriert ist, den seitwärtigen Nocken in Eingriff zu nehmen, wenn das Nassreinigungsmodul (149; 290; 1290) an das Fahrgestell (102) gekoppelt ist.

15. Reinigungspad (121; 421) für einen robotischen Reiniger (100; 220), umfassend:
einen starren Gleiter (123; 423) an einer Vorderkante (124; 424) des Reinigungspads (121; 421), wobei der starre Gleiter (123; 423) dazu konfiguriert ist, gleitbar in einem entsprechenden Kanal (481) des Nassreinigungsmoduls (149; 290; 1290) angeordnet zu sein, um die Vorderkante (124; 424) des Reinigungspads (121; 421) lösbar an das Nassreinigungsmodul (149; 290; 1290) zu koppeln, wobei ein Abschnitt des starren Gleiters (123; 423) auf dem Reinigungspad (121; 421) positioniert ist, um sich über eine Endfläche der Vorderkante (124; 424) hinaus nach außen zu erstrecken.

## Revendications

1. Robot nettoyeur (100 ; 220) comprenant :
un châssis (102) ;
une pluralité de roues motrices (130) couplées au châssis (102) ;
un contrôleur (139) pour contrôler de manière autonome les roues motrices (130) pour manœuvrer le robot nettoyeur (100 ; 220) sur une surface de nettoyage ; et
un module de nettoyage humide (149 ; 290 ; 1290) couplé au châssis (102),
**caractérisé en ce que** le module de nettoyage humide (149 ; 1290) comprend :
un tampon de nettoyage (121 ; 421) comportant un curseur rigide (123 ; 423) au niveau d'un bord d'attaque (124 ; 424) du tampon de nettoyage (121 ; 421), le curseur rigide (123 ; 423) étant disposé de manière coulissante dans un canal correspondant (481) du module de nettoyage humide (149 ; 290 ; 1290) pour coupler de manière amovible le bord d'attaque (124 ; 424) du tampon de nettoyage (121 ; 421) au module de nettoyage humide (149 ; 290 ; 1290).

2. Robot nettoyeur (100 ; 220) selon la revendication 1, dans lequel le module de nettoyage humide (149 ; 290 ; 1290) comprend en outre un réservoir (145 ; 293 ; 1293) destiné à recevoir un fluide de nettoyage, le réservoir (145 ; 293 ; 1293) s'étendant vers le haut à partir d'une base de réservoir (120 ; 410 ; 292 ; 1292), et dans lequel le canal (481) est formé dans un bord avant (431) de la base de réservoir (120 ; 410 ; 292 ; 1292).

3. Robot nettoyeur (100 ; 220) selon la revendication 2, et dans lequel le tampon de nettoyage (121 ; 421) est plié autour d'une partie du bord avant (431) de la base de réservoir (120 ; 410 ; 292 ; 1292) lorsque le curseur rigide (123 ; 423) est disposé dans le canal (481).

4. Robot nettoyeur (100 ; 220) selon la revendication 1, dans lequel une partie du curseur rigide (123 ; 423) s'étend vers l'extérieur à partir du canal (481) au niveau d'un côté (116) du châssis (102) pour permettre à un utilisateur de saisir le curseur rigide (123 ; 423) pour retirer le tampon de nettoyage (121 ; 421) du module de nettoyage humide (149 ; 290 ; 1290).

5. Robot nettoyeur (100 ; 220) selon la revendication 4, dans lequel une partie du curseur rigide (123 ; 423) s'étend vers l'extérieur à partir du canal (481) au niveau d'un côté (116) du châssis (102) d'au moins environ 1 cm.

6. Robot nettoyeur (100 ; 220) selon la revendication 1, dans lequel le curseur rigide (123 ; 423) s'étend uniquement le long d'une partie du bord d'attaque (124 ; 424) du tampon de nettoyage (121 ; 421).

7. Robot nettoyeur (100 ; 220) selon la revendication 1, dans lequel le curseur rigide (123 ; 423) comporte une partie plate (427) couplée au bord d'attaque (124 ; 424) du tampon de nettoyage (121 ; 421) et une partie de tête (429) au niveau d'une partie avant du curseur rigide (123 ; 423), et dans lequel le bord d'attaque du tampon de nettoyage (121 ; 421) vient en butée contre la partie de tête (429) du curseur rigide (123 ; 423).

8. Robot nettoyeur (100 ; 220) selon la revendication 1, dans lequel chacune des roues motrices (130) comprend des première (2594) et seconde (2596) parois latérales associées avec une surface de bande de roulement (2592) disposée entre les parois latérales (2594, 2596), chacune des roues motrices (130) comprenant en outre un bord périphérique (2598) définissant une transition entre les parois latérales (2594, 2596) et la surface de bande de roulement (2592), chacune des roues motrices (130) comprenant en outre un motif de bande de roulement sur la surface de bande de roulement (2592) qui ne coupe pas le bord périphérique (2598).

9. Robot nettoyeur (100 ; 220) selon la revendication 1, le robot nettoyeur (100 ; 220) comprenant en outre un aspirateur couplé au châssis (102) et comprenant un conduit d'aspiration (155) au bas du châssis (120), dans lequel les roues motrices (130) peuvent tourner indépendamment autour d'axes de rotation associés, et dans lequel le tampon de nettoyage (121 ; 421) est couplé au châssis (102) à l'arrière de l'aspirateur et à l'arrière des axes de rotation.

10. Robot nettoyeur (100 ; 220) selon la revendication 1, dans lequel le module de nettoyage humide (149 ; 290 ; 1290) comprend en outre un applicateur de liquide configuré pour appliquer un fluide de nettoyage sur le tampon de nettoyage (121 ; 421), un module d'agitation configuré pour agiter le tampon de nettoyage (121 ; 421), et un moteur pour entraîner à la fois l'applicateur de liquide et le module d'agitation.

11. Robot nettoyeur (100 ; 220) selon la revendication 1, dans lequel le module de nettoyage humide (149 ; 290 ; 1290) comprend en outre un réservoir (145 ; 293 ; 1293) destiné à recevoir un fluide de nettoyage, le réservoir (145 ; 293 ; 1293) s'étendant vers le haut à partir d'une base de réservoir (120 ; 410 ; 292 ; 1292), et dans lequel le tampon de nettoyage (121 ; 421) est couplé à un fond de la base de réservoir (120 ; 410 ; 292 ; 1292).

12. Robot nettoyeur (100 ; 220) selon la revendication 1, dans lequel le module de nettoyage humide (149 ; 290 ; 1290) comprend en outre un module d'agitation directement couplé à une partie avant du tampon de nettoyage (121 ; 421) et indirectement couplé à une partie arrière du tampon de nettoyage (121 ; 421), le module d'agitation étant configuré pour communiquer une agitation au tampon de nettoyage (121 ; 421).

13. Robot nettoyeur (100 ; 220) selon la revendication 1, dans lequel le module de nettoyage humide (149 ; 290 ; 1290) comprend en outre :
un réservoir (145 ; 293 ; 1293) destiné à contenir un fluide de nettoyage, le réservoir (145 ; 293 ; 1293) étant fixé en position par rapport au châssis (102) lorsque le module de nettoyage humide (149 ; 290 ; 1290) est couplé au châssis (102) ;
une plaque de tampon de nettoyage (210) couplée de manière mobile au fond du réservoir (145 ; 293 ; 1293), le canal correspondant (481) du module de nettoyage humide (149 ; 290 ; 1290) étant prévu sur un bord d'attaque de la plaque de nettoyage (210) ; et
un module d'agitation couplé à la plaque de tampon de nettoyage (210) et configuré pour générer un mouvement linéaire pour agiter le tampon de nettoyage (121 ; 421).

14. Robot nettoyeur (100 ; 220) selon la revendication 13, dans lequel le module d'agitation comprend au moins une came latérale entraînée par une sortie rotative d'un moteur, et dans lequel la plaque de tampon de nettoyage (210) est configurée pour s'engager avec la came latérale lorsque le module de nettoyage humide (149 ; 290 ; 1290) est couplé au châssis (102).

15. Tampon de nettoyage (121 ; 421) pour un robot nettoyeur (100 ; 220) comprenant :
un curseur rigide (123 ; 423) au niveau d'un bord d'attaque (124 ; 424) du tampon de nettoyage (121 ; 421), le curseur rigide (123 ; 423) étant configuré pour être disposé de manière coulissante dans un canal correspondant (481) du module de nettoyage humide (149 ; 290 ; 1290) pour coupler de manière amovible le bord d'attaque (124 ; 424) du tampon de nettoyage (121 ; 421) au module de nettoyage humide (149 ; 290 ; 1290), dans lequel une partie du curseur rigide (123 ; 423) est positionnée sur le tampon de nettoyage (121 ; 421) pour s'étendre vers l'extérieur au-delà d'une surface d'extrémité du bord d'attaque (124 ; 424).
